# EUROPÄISCHE PATENTSCHRIFT

(11) **EP 2 512 909 B1**
(45) Veröffentlichungstag und Bekanntmachung des Hinweises auf die Patenterteilung: **29.01.2014**
(21) Anmeldenummer: 10800721.2
(22) Anmeldetag: 16.12.2010
(51) Int. Cl.: B62M 11/14, B62M 11/06

(54) **SCHALTVORRICHTUNG UND GETRIEBEEINHEIT**
SHIFTING DEVICE AND GEAR UNIT
DISPOSITIF DE COMMANDE ET ENSEMBLE DE TRANSMISSION

(30) Priorität: 18.12.2009 DE 102009060484
(43) Veröffentlichungstag der Anmeldung: 24.10.2012
(73) Patentinhaber: Pinion GmbH, 70469 Stuttgart (DE)
(72) Erfinder: SCHMITZ, Michael, 56412 Niederelbert (DE); LERMEN, Christoph, 66636 Tholey (DE)
(74) Vertreter: Witte, Weller & Partner
(86) Internationale Anmeldenummer: PCT/EP2010/069996
(87) Internationale Veröffentlichungsnummer: WO 2011/073360

(56) Entgegenhaltungen:
- EP-A2- 1 445 088
- WO-A1-2008/089932
- US-A- 5 924 950

## Beschreibung

Die vorliegende Erfindung betrifft eine Schaltvorrichtung für eine Getriebeeinheit eines insbesondere mit Muskelkraft angetriebenen Fahrzeugs, mit einer ersten Welle, die als Hohlwelle ausgebildet ist, an der eine Mehrzahl von Losrädern gelagert ist, wobei die Losräder mit einer entsprechenden Mehrzahl von Zahnrädern, die an einer zweiten Welle gelagert sind, in Eingriff stehen, wobei die Losräder mittels Schaltmitteln mit der ersten Welle verbindbar sind, wobei die Schaltmittel mittels einer koaxial in der ersten Welle angeordneten Nockenwelle betätigbar sind, wobei die Nockenwelle mit Antriebsmitteln verbunden ist, um zum Betätigen der Schaltmittel relativ zu der ersten Welle rotiert zu werden.

Die vorliegende Erfindung betrifft ferner eine Getriebeeinheit für ein insbesondere mit Muskelkraft angetriebenes Fahrzeug, mit einer ersten Welle, an der eine Mehrzahl von ersten Zahnrädern gelagert ist, einer zweiten Welle, an der eine entsprechende Mehrzahl von zweiten Zahnrädern gelagert ist, wobei die zweiten Zahnräder mit den entsprechenden ersten Zahnrädern in Eingriff stehen.

Die vorliegende Erfindung betrifft ferner ein Fahrzeug mit einem Rahmen und einer Getriebeeinheit, die eine erste Welle, an der eine Mehrzahl von ersten Zahnrädern gelagert ist, und eine zweite Welle aufweist, an der eine entsprechende Mehrzahl von zweiten Zahnrädern gelagert ist, wobei die zweiten Zahnräder mit den ersten Zahnrädern in Eingriff stehen, wobei die erste und die zweite Welle in einem Getriebegehäuse, das die Getriebeeinheit wenigstens teilweise umgibt, gelagert sind.

Derartige Getriebeeinheiten dienen dazu, unterschiedliche Übersetzungen für den Antrieb eines insbesondere mit Muskelkraft angetriebenen Fahrzeugs zu realisieren.

Grundsätzlich existieren drei Arten von Gangschaltungen für mit Muskelkraft angetriebene Fahrzeuge bzw. Fahrräder, und zwar Kettenschaltungen, Nabenschaltungen und Fahrradgetriebe.

Die Kettenschaltung hat sich in den letzten Jahrzehnten im Wesentlichen nicht verändert. Dabei überträgt eine Kette die Antriebskraft von einer Tretkurbel zur Hinterachse des Fahrrades, wobei ein an der Hinterachse montiertes Ritzelpaket mit bis zu 11 Ritzeln montiert ist, zwischen denen mittels eines am Rahmen befestigten Schaltwerks zur Führung der Kette hin- und hergeschaltet werden kann. Weiterhin sind die meisten Fahrräder zusätzlich mit einer Schaltung am Kettenblatt des Tretlagers ausgestattet. Dabei sind bis zu drei Kettenblätter an der Tretkurbel angebracht, zwischen denen mittels eines am Rahmen befestigten Umwerfers hin- und hergeschaltet werden kann. Derartige Kettenschaltungen bieten bis zu 30 Gänge, wobei allerdings systembedingt viele Gänge redundant sind und durch hohe Reibverluste bedingt durch einen diagonalen Kettenverlauf einige Gänge nicht oder nur eingeschränkt nutzbar sind.

Nachteilig bei dem Prinzip der Kettenschaltung ist neben der Vielzahl von redundanten Gängen und den Reibverlusten, dass die Komponenten offenliegen und daher Umwelteinflüssen, wie Wasser und Schmutz, direkt ausgesetzt sind und durch Stöße sehr leicht beschädigt werden können.

Die zweite Art von handelsüblichen Fahrradschaltungen ist die Nabenschaltung. Im Gegensatz zur Kettenschaltung versteht man unter dieser ein in das Nabengehäuse der Hinterachse eingebautes Getriebe. Eine Nabenschaltung weist üblicherweise keine außen liegenden Schaltungskomponenten auf und ist daher stoßunempfindlich und weniger den Umwelteinflüssen ausgesetzt als die Kettenschaltung. Eine Nabenschaltung, wie sie bspw. aus der DE 197 20 794 A1 bekannt ist, kann derzeit bis zu 14 Gänge realisieren. Nachteilig bei dem Prinzip der Nabenschaltung in der Hinterachse ist es, dass das Gewicht der rotierenden Massen erhöht ist und, im Falle von hinterradgefederten Fahrräder, dass die zum Gesamtgewicht relativ gesehene ungefederte Masse erhöht ist. Ferner verlagert sich der Schwerpunkt des Fahrrades in Richtung der Hinterachse, was sich insbesondere bei hinterradgefederten Mountainbikes ungünstig auf die Fahreigenschaften des Fahrrades auswirkt.

Eine derartige Nabenschaltung ist bspw. aus der EP 0 383 350 B1 bekannt, bei der zwei Planetengetriebe koaxial zu einer gehäusefesten Nabe angeordnet sind, wobei die Eingangswelle mit Planetenträgern verbindbar ist und über eine drehbare Schaltvorrichtung die Sonnenräder der Planetengetriebe mit der gehäusefesten Nabe drehfest verbindbar sind, um unterschiedliche Übersetzungsverhältnisse des Gesamtgetriebes zu realisieren. Nachteilig bei diesem Getriebe ist es, dass der Aufbau des Gesamtgetriebes komplex ist und demnach zum einen kostenaufwändig in der Herstellung ist und zum anderen durch die hohe Anzahl an Komponenten ein hohes Gewicht bei gleichzeitig geringer Anzahl von realisierbaren Gängen aufweist.

Die dritte Variante der Fahrradschaltungen stellen die im Bereich des Tretlagers montierten Fahrradgetriebe bzw. Tretlagergetriebe dar. Diese Art der Fahrradschaltung ist bei handelsüblichen Fahrrädern nicht oder nur sehr vereinzelt verbreitet. Im Allgemeinen haben derartige Fahrradgetriebe den Vorteil gegenüber herkömmlichen Ketten- oder Nabenschaltungen, dass sie keine offenliegenden Komponenten aufweisen und demnach gegenüber Stößen und Umwelteinflüssen geschützt sind, und zum anderen den Schwerpunkt des Fahrrades in die Mitte verlagern, wobei gleichzeitig die Summe der ungefederten Masse reduziert wird. Dies ist im "Mountainbike-Sport" von besonderem Vorteil. Eine technische Herausforderung bei derartigen Fahrradgetrieben ist es, eine kompakte Bauform bei gleichzeitig einer großen Anzahl von schaltbaren Gängen zu realisieren.

Aus der US 5,924,950 A ist ein Fahrradgetriebe mit den Merkmalen des Oberbegriffes der Ansprüchen 1 und 2 bekannt, mit einer Eingangswelle, an der eine Mehrzahl von Antriebsrädern gelagert ist, und einer Vorgelegewelle, an der eine entsprechende Anzahl von schaltbaren angetriebenen Rädern gelagert ist. Die schaltbaren Räder der Vorgelegewelle werden mittels mehrerer, in der Vorgelegewelle angeordneten, axial verschiebbaren Schaltbolzen und Freiläufen geschaltet, wobei die Vorgelegewelle über ein Planetengetriebe mit einem Ritzel als Ausgangsglied des Fahrradgetriebes verbunden ist. Das Ritzel ist über eine Kupplung mit dem Sonnenrad des Planetengetriebes verbunden und das Hohlrad des Planetengetriebes kann mittels eines Bowdenzuges gebremst werden. Durch dieses Fahrradgetriebe lassen sich 14 Gänge realisieren. Nachteilig bei diesem System ist die axial große Bauform und die vergleichsweise geringe Anzahl von 14 realisierbaren Gängen.

Ferner ist aus der WO 2008/089932 A1 eine Getriebeeinheit für Fahrräder bekannt, bei der über zwei Vorgelegewellen und ein weiteres Teilgetriebe eine hohe Anzahl von Gängen durch die Multiplikation der Einzelgänge der beiden Teilgetriebe realisierbar ist und gleichzeitig eine kompakte Bauform realisiert werden kann. Nachteilig bei dieser Getriebeeinheit ist es, dass zum Schalten der Losräder eine Nockenwelle axial verschoben wird und das Getriebe dadurch eine axial große Bauform hat.

Aus der EP 1 982 913 A1 ist ein Getriebe für Fahrräder bekannt, bei dem Losräder an einer Eingangswelle des Getriebes gelagert sind, die mittels einer in der Welle gelagerten Hülse selektiv mit der Eingangswelle verbindbar sind, wobei die Hülse mittels zweier Planetengetriebe relativ zu der Eingangswelle gedreht wird, um die Losräder zu schalten. Die Planetengetriebe sind koaxial zu der Eingangswelle angeordnet und werden über eine parallel zu der Eingangswelle versetzte Schaltwelle betätigt, die mit einem Bowdenzug verbunden ist. Die Schaltwelle ist über ein Stirnradgetriebe mit einem Planetenträger eines der Planetengetriebe drehfest verbunden, um die Rotation der Schaltwelle auf die Hülse zu übertragen. Nachteilig bei diesem Getriebe ist es, dass die zusätzliche Rotation mittels der parallel versetzten Schaltwelle auf das Planetengetriebe übertragen wird, wodurch ein großer Bauraum für die Getriebeeinheit nötig ist.

Es ist daher die Aufgabe der vorliegenden Erfindung, eine verbesserte Schaltvorrichtung bzw. eine verbesserte Getriebeeinheit für ein insbesondere mit Muskelkraft angetriebenes Fahrzeug bereitzustellen, die insbesondere gegenüber den bekannten Schaltvorrichtungen bzw. Getriebeeinheiten eine kompaktere Bauform, eine große Anzahl von Gängen und gleichzeitig ein reduziertes Gesamtgewicht ermöglicht und einfach zu bedienen ist.

Im erfindungsgemäßen Sinne werden unter mit Muskelkraft angetriebenen Fahrzeugen Fahrzeuge verstanden, die ausschließlich mit Muskelkraft angetrieben werden oder bei denen Muskelkraft in Kombination mit einer Antriebsmaschine, wie z.B. einer Verbrennungskraftmaschine oder einem elektrischen Antrieb zum Antreiben des Fahrzeugs verwendet wird.

Diese Aufgabe wird bei der eingangs genannten Schaltvorrichtung gemäß einem ersten Aspekt der Erfindung dadurch gelöst, dass die Antriebsmittel ein Drehzahlübertragungsgetriebe aufweisen, das koaxial zu der ersten Welle angeordnet ist, wobei koaxial in der ersten Welle eine zweite Nockenwelle angeordnet ist, um eine Mehrzahl von zweiten Losrädern, die an der ersten Welle gelagert sind, mittels Schaltmittel mit der ersten Welle zu verbinden.

Ferner wird die o.g. Aufgabe bei der eingangs genannten Schaltvorrichtung gemäß einem zweiten Aspekt der Erfindung dadurch gelöst, dass die Antriebsmittel zwei Planetengetriebe aufweisen, wobei Planetenträger der Planetengetriebe miteinander verbunden sind.

Weiterhin wird die o.g. Aufgabe bei der eingangs genannten Schaltvorrichtung gemäß einem dritten Aspekt der Erfindung dadurch gelöst, dass die Nockenwelle mittels Rastmitteln mit der ersten Welle in wenigstens einer Rotationsposition verbindbar ist.

Ferner wird die o.g. Aufgabe bei der eingangs genannten Schaltvorrichtung gemäß einem vierten Aspekt der Erfindung dadurch gelöst, dass koaxial in der ersten Welle eine zweite Nockenwelle angeordnet ist, die mittels eines Mitnehmers der ersten Nockenwelle relativ zu der ersten Welle drehbar ist.

Ferner wird die o.g. Aufgabe gemäß einem fünften Aspekt der Erfindung dadurch gelöst, dass in der ersten Welle eine Federhülse angeordnet ist, die die Nockenwelle umfänglich umgibt, um die Schaltmittel mit einer Federkraft vorzuspannen.

Gemäß einer Ausführungsform der Erfindung wird ein Getriebe bereitgestellt mit einer Welle, die als Hohlwelle ausgebildet ist, an der eine Mehrzahl von Losrädern gelagert ist, die mittels Schaltmitteln mit der Hohlwelle verbindbar sind, wobei die Schaltmittel mittels einer drehbaren Nockenwelle betätigbar sind, wobei die Losräder Sonnenräder von Planetenradsätzen bilden und Planetenträger und/oder Hohlräder der Planetenradsätze mit der Welle und/oder mit einer Ausgangswelle verbindbar sind. Dadurch sind weitere Gangstufen des Getriebes realisierbar.

Die Ausgangswelle ist dabei vorzugsweise koaxial zu der Welle gelagert. Dadurch ist eine besonders kompakte Bauform möglich. Vorzugsweise ist der Planetenträger mit der Welle mittels Schaltmitteln verbindbar, wobei die Schaltmittel mittels der drehbaren Nockenwelle betätigbar sind. Dadurch kann auf eine zusätzliche Nockenwelle oder weitere Betätigungsmittel verzichtet werden.

Ein Vorteil des ersten Aspektes der erfindungsgemäßen Schaltvorrichtung ist es, dass durch das koaxial zu der Welle angeordnete Drehzahlüberlagerungsgetriebe und durch die zweite Nockenwelle eine kompakte Getriebeeinheit mit einer Vielzahl von Gängen realisierbar ist.

Ein Vorteil des zweiten Aspektes der erfindungsgemäßen Schaltvorrichtung ist es, dass durch die Kombination von zwei Drehzahlüberlagerungsgetrieben die Rotation der Nockenwelle in der ersten Welle mit wenigen Bauteilen realisierbar ist und somit das Gesamtgewicht des Getriebes begrenzt ist.

Ein Vorteil des dritten Aspektes der Erfindung ist es, dass durch die Rastmittel zur genauen Positionierung der Nockenwelle relativ zu der ersten Welle innerhalb des Getriebes auf externe aufwändige und gleichzeitig anfällige Schalthebel mit Rastierung verzichtet werden kann.

Ein Vorteil des vierten Aspektes der Erfindung ist es, dass auf zwei unabhängige Schalthebel verzichtet werden kann, wodurch das Schalten besonders komfortabel wird. Dabei können die Antriebsmittel mechanische, elektrische und/oder hydraulische Antriebsmittel sein.

Ein Vorteil des fünften Aspektes der Erfindung ist es, dass die Schaltmittel mittels einer einfach zu montierenden Federhülse zuverlässig vorgespannt werden können und so der Montageaufwand erheblich reduziert werden kann.

Die Aufgabe der vorliegenden Erfindung wird somit vollständig gelöst.

Bei dem ersten Aspekt der Erfindung stehen die zweiten Losräder vorzugsweise mit einer entsprechenden Mehrzahl von Zahnrädern in Eingriff, die an einer dritten Welle gelagert sind, wobei die zweiten Losräder mit den Zahnrädern Radpaare eines zweiten Teilgetriebes bilden.

Es ist im Allgemeinen bevorzugt, dass das Drehzahlüberlagerungsgetriebe an einem axialen Ende der Welle angeordnet ist.

Dadurch ist eine radial besonders kompakte Bauform möglich.

Vorzugsweise ist ein Hohlrad des zweiten der Planetengetriebe mit Betätigungsmitteln verbunden.

Dadurch lässt sich eine zusätzliche Rotation von außen einfach auf die Nockenwelle übertragen.

Vorzugsweise sind die Betätigungsmittel koaxial zu der ersten Welle angeordnet.

Durch diese Anordnung lässt sich eine Rotation von außen auf die Nockenwelle mit konstruktiv einfachen Mitteln realisieren, wodurch eine besonders kompakte Bauform des Getriebes ermöglicht wird.

Die Betätigungsmittel weisen vorzugsweise eine Zugscheibe auf, die koaxial zu der ersten Welle gelagert ist. Die Zugscheibe ist vorzugsweise drehfest mit dem Hohlrad verbunden. In einer besonderen Ausführungsform ist die Zugscheibe einstückig mit dem Hohlrad ausgebildet. Dadurch ist eine besonders leichte Bauform der Betätigungsmittel möglich.

Vorzugsweise ist ein Sonnenrad des ersten Planetengetriebes mit der Nockenwelle drehfest verbunden.

Dadurch ist das Planetengetriebe mit der Nockenwelle ohne zusätzlichen konstruktiven Aufwand verbindbar, wodurch eine allgemein kompakte Bauform möglich ist.

Weiterhin ist es bevorzugt, wenn ein Sonnenrad des zweiten Planetengetriebes mit der ersten Welle drehfest verbunden ist.

Dadurch lässt sich die Rotation der ersten Welle mit geringem konstruktiven Aufwand auf das Planetengetriebe und die Nockenwelle übertragen.

Weiterhin ist es bevorzugt, wenn das Drehzahlüberlagerungsgetriebe derart ausgebildet ist, dass die Nockenwelle synchron zu der ersten Welle rotiert wird. Dabei ist das Drehzahlüberlagerungsgetriebe so ausgebildet, dass die Nockenwelle im Normalbetrieb, wenn das Hohlrad des zweiten Planetengetriebes nicht rotiert, also nicht geschaltet wird, synchron zu der ersten Welle rotiert.

Dadurch werden die eingestellten Schaltzustände bei rotierender erster Welle und stillstehendem Hohlrad beibehalten.

Bei dem dritten Aspekt der Erfindung ist es bevorzugt, wenn die Rastmittel ein erstes Rastglied aufweisen, das mit der Nockenwelle drehfest verbunden ist und ein zweites Rastglied aufweist, das mit der ersten Welle drehfest verbunden ist.

Dadurch kann ein bestimmter Schaltzustand ohne externe Rastmittel fest eingestellt werden.

Es ist weiterhin bevorzugt, wenn die Rastmittel koaxial zu der ersten Welle angeordnet sind.

Dadurch können die Rastmittel ohne zusätzlichen Platzbedarf realisiert werden, wodurch eine kompakte Bauform möglich ist.

Weiter ist es bevorzugt, wenn wenigstens eines der Rastglieder in der ersten Welle angeordnet ist.

Dadurch kann eine kompakte Bauform der Getriebeeinheit erreicht werden, weil ein ungenutzter Bauraum in der ersten Welle genutzt wird.

Weiterhin ist es bevorzugt, wenn die Rastmittel wenigstens eine Nase und wenigstens eine Nut aufweisen, um in der wenigstens einen Rotationsposition zu rasten.

Dadurch werden die Rastmittel besonders robust und zuverlässig, weil sie ohne zusätzliche bewegliche Teile realisierbar sind.

Weiterhin ist es bevorzugt, wenn wenigstens eines der Rastglieder federnd axial verschieblich gelagert ist.

Dadurch ist zum einen gewährleistet, dass die Rastmittel die erste Welle und die Nockenwelle in einer Rotationsposition verbinden und gleichzeitig lässt sich die rastende Verbindung durch Aufbringen eines Drehmomentes ohne zusätzlichen Mechanismus aus der Rotationsposition lösen.

Weiterhin ist es bevorzugt, wenn die zweite Nockenwelle mittels eines Mitnehmers der ersten Nockenwelle relativ zu der ersten Welle drehbar ist.

Dadurch kann auf einen zweiten unabhängigen Schalthebel verzichtet werden, wodurch die Handhabung der Schaltvorrichtung besonders einfach und komfortabel ist.

Bei der Erfindung ist es bevorzugt, wenn die zweite Nockenwelle mittels Rastmitteln in wenigstens einer Rotationsposition mit der ersten Welle verbindbar ist.

Dadurch lässt sich ein eingestellter Schaltzustand des zweiten Teilgetriebes mit einfachen Mitteln ohne äußere Betätigung erhalten, wodurch auch unbeabsichtigtes Schalten verhindert wird.

Weiter ist es bevorzugt, wenn die zweite Nockenwelle federnd axial verschieblich gelagert ist.

Dadurch kann gewährleistet werden, dass die Rastmittel in der vordefinierten Rotationsposition mit der ersten Welle rasten und durch Aufbringen eines Drehmomentes aus der Rotationsposition gelöst werden können.

Weiterhin ist es bevorzugt, wenn die Rastmittel wenigstens eine Nase und wenigstens eine Nut aufweisen, um in der wenigstens einen Rotationsposition zu verrasten.

Dadurch werden die Rastmittel besonders robust und zuverlässig, weil auf zusätzliche bewegliche Teile verzichtet werden kann.

Weiterhin ist es bevorzugt, wenn der Mitnehmer ein bewegliches Mitnehmerelement aufweist, das auf einem Gleitabschnitt gleitet, der mit der ersten Welle drehfest verbunden ist.

Dadurch kann die zweite Nockenwelle an bestimmten Rotationspositionen um einen bestimmten Rotationswinkel relativ zur ersten Welle verdreht werden und eine einfache logische Verknüpfung der beiden Nockenwellen realisiert werden.

Weiterhin ist es bevorzugt, wenn das Mitnehmerelement in einer Ausnehmung eines Mitnehmergliedes in radialer Richtung beweglich gelagert ist.

Dadurch lässt sich das Mitnehmerelement mit geringem konstruktivem Aufwand und geringem Platzbedarf mit der zweiten Nockenwelle lösbar in Eingriff bringen.

Weiterhin ist es bevorzugt, wenn das Mitnehmerglied mit der ersten Nockenwelle drehfest verbunden ist.

Dadurch lässt sich die Rotation der ersten Nockenwelle auf den Mitnehmer übertragen und somit eine logische Verknüpfung der Schaltung der beiden Teilgetriebe realisieren.

Weiterhin ist es bevorzugt, wenn der Gleitabschnitt wenigstens eine Nocke aufweist, durch die das Mitnehmerelement in radialer Richtung bewegbar ist.

Dadurch kann die zweite Nockenwelle an einer vorbestimmten Rotationsposition der ersten Nockenwelle relativ zu der ersten Welle mitgenommen bzw. rotiert werden, und zwar um einen bestimmten Drehwinkel.

Weiterhin ist es bevorzugt, wenn das Mitnehmerelement mit der zweiten Nockenwelle in Eingriff bringbar ist, um die erste Nockenwelle mit der zweiten Nockenwelle drehfest zu verbinden.

Dadurch kann die Rotation der ersten Nockenwelle ohne Betätigung von außen auf die zweite Nockenwelle übertragen werden.

Weiterhin ist es bevorzugt, wenn die Schaltmittel als schaltbare Freiläufe ausgebildet sind.

Dadurch können die Losräder mit einfachen und kompakten Schaltmitteln mit der ersten Welle drehfest verbunden werden.

Vorzugsweise weisen die Schaltmittel Schaltklinken auf, die mit einer Innenverzahlung der Losräder in Eingriff bringbar sind.

Dadurch lassen sich betätigbare Freiläufe realisieren, die ein großes Drehmoment aufnehmen können, weil sie Kraft in tangentialer Richtung von dem Losrad auf die Welle übertragen.

Ferner ist es bevorzugt, wenn die Nockenwellen Betätigungsabschnitte aufweisen, mittels derer die Freiläufe betätigbar sind.

Dadurch lassen sich die Freiläufe durch eine konstruktiv einfache Maßnahme mit den Losrädern in Eingriff bringen.

Ferner ist es bevorzugt, wenn die Nockenwellen derart ausgebildet sind, dass Freiläufe von zwei aufeinanderfolgenden Gangstufen gleichzeitig mit den Losrädern in Eingriff bringbar sind.

Dadurch ist es möglich, ein Lastschaltgetriebe zu realisieren, weil der Freilauf des höheren Ganges mit dem entsprechenden Losrad in Eingriff gebracht wird, während der Freilauf des niedrigeren Ganges frei läuft. Ferner wird ein Leerdrehen vermieden.

Bei dem vierten Aspekt der Erfindung ist es bevorzugt, wenn an der Federhülse Federelemente ausgebildet sind, die jeweils einem der Schaltmittel zugeordnet sind.

Dadurch können kostengünstige Federelemente für die Schaltmittel bereitgestellt werden, die einfach in der ersten Welle montierbar sind.

Es ist bevorzugt, wenn die Federelemente einstückig mit der Federhülse ausgebildet sind.

Dadurch können die Federelemente besonders kostengünstig gefertigt werden.

Vorzugsweise ist die zweite Welle eine Eingangswelle der Getriebeeinheit. Dadurch kann das in die Getriebeeinheit eingebrachte Drehmoment begrenzt werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Seitenansicht eines Fahrradrahmens mit einem Mehrganggetriebe;
- Fig. 2: einen Schaltplan eines Mehrganggetriebes mit zwei Teilgetrieben und einer gemeinsamen Vorgelegewelle;
- Fig. 3: einen Schaltplan einer Schaltvorrichtung mit drehbarer Nockenwelle und zwei Planetengetrieben;
- Fig. 4: eine perspektivische Darstellung einer Ausführungsform einer Getriebeeinheit mit zwei Teilgetrieben und einer gemeinsamen Vorgelegewelle;
- Fig. 5: eine perspektivische Explosionsdarstellung einer Welle zur Lagerung von schaltbaren Losrädern mit drehbarer Nockenwelle und zwei Planetengetrieben;
- Fig. 6: eine perspektivische Darstellung eines Losrades mit Innenverzahnung;
- Fig. 7: eine perspektivische Darstellung einer Schaltklinke;
- Fig. 8A-F: Prinzipskizzen zur Erläuterung von Schaltvorgängen mit drehbarer Nockenwelle;
- Fig. 9: eine perspektivische Darstellung einer Welle mit Schaltklinken, drehbaren Nockenwellen und doppeltem Planetengetriebe;
- Fig. 10: eine Explosionsdarstellung zweier drehbarer Nockenwellen mit einer Mitnehmerkupplung;
- Fig. 11: eine schematische Schnittansicht einer Welle mit Losrädern und einem Mitnehmer in axialer Blickrichtung;
- Fig. 12: eine schematische Schnittdarstellung einer Getriebeeinheit mit zwei drehbaren Nockenwellen und doppeltem Planetengetriebe;
- Fig. 13: eine Explosionsdarstellung zweier drehbarer Nockenwellen mit zwei Federhülsen;
- Fig. 14: eine perspektivische Darstellung einer Welle mit Schaltklinken und Federhülsen;
- Fig. 15: eine Explosionsdarstellung eines Getriebegehäuses mit Mehrganggetriebeeinheit; und
- Fig. 16: eine perspektivische Darstellung eines Getriebegehäuses für ein Mehrganggetriebe.

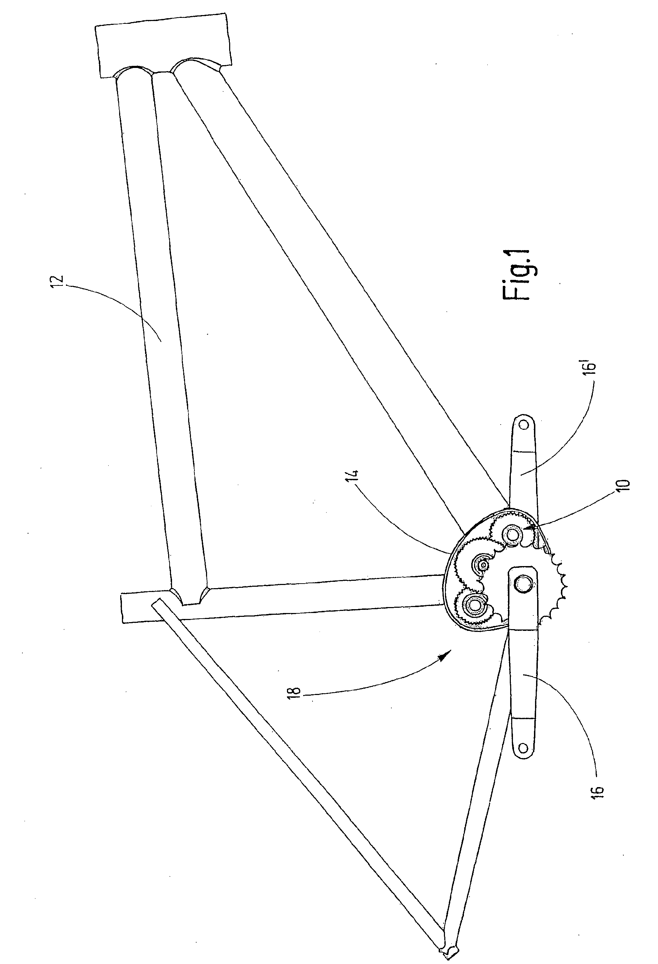

In Fig. 1 ist eine Getriebeeinheit allgemein mit 10 bezeichnet.

Fig. 1 zeigt eine Seitenansicht eines Fahrradrahmens 12, der ein Getriebegehäuse 14 aufweist, in dem die Getriebeeinheit 10 aufgenommen ist. Die Getriebeeinheit 10 ist in dieser Darstellung nur schematisch angedeutet und ist als kompakte Einheit ausgebildet, die vorzugsweise in einem hier nicht dargestellten Getriebekäfig angeordnet ist. Die Getriebeeinheit 10 wird hierin beispielhaft für den Einsatz bei einem Zweirad beschrieben, wobei allerdings auch der Einsatz bei anderen mit Muskelkraft betriebenen Fahrzeugen möglich ist. Es versteht sich, dass Getriebeeinheit 10 auch für Fahrzeuge verwendet werden kann, bei denen Muskelkraft in Kombination mit einer Antriebsmaschine zum Antreiben des Fahrzeugs verwendet wird.

Die Getriebeeinheit 10 und das Getriebegehäuse 14 bilden zusammen mit Tretkurbeln 16 und 16' ein Mehrgang-Getriebe 18.

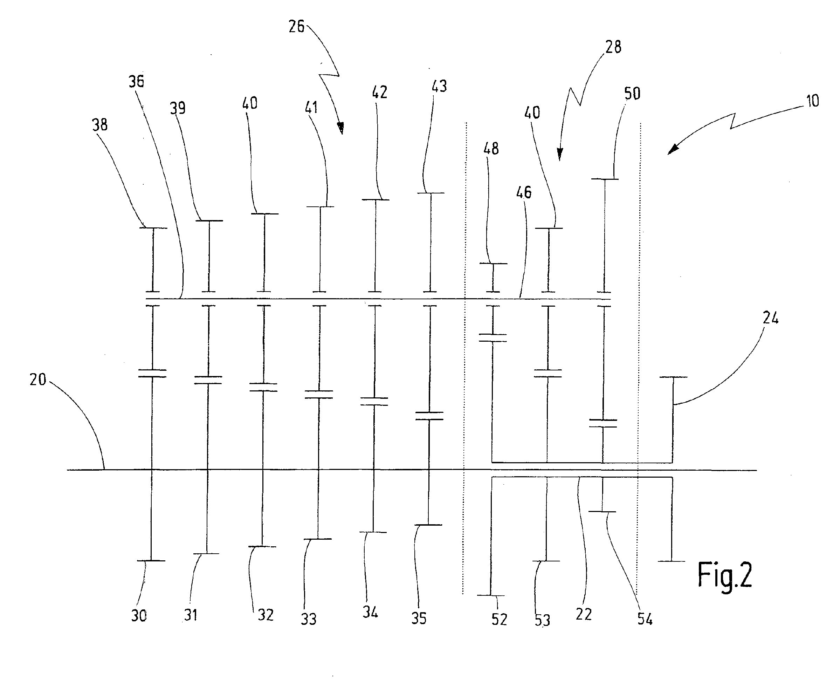

Fig. 2 zeigt einen Schaltplan der Getriebeeinheit 10.

Die Getriebeeinheit 10 weist eine Eingangswelle 20 und eine Ausgangswelle 22 auf. Die Eingangswelle 20 ist als Durchgangswelle ausgebildet. Die Ausgangswelle 22 ist als Hohlwelle ausgebildet. Die Eingangswelle 20 und die Ausgangswelle 22 sind koaxial zueinander angeordnet. Die Ausgangswelle 22 ist mit einem Kettenblatt 24 drehfest verbunden, das ein Ausgangsglied der Getriebeeinheit 10 bildet.

Die Getriebeeinheit 10 weist ein erstes Teilgetriebe 26 und ein zweites Teilgetriebe 28 auf. An der Eingangswelle 20 ist eine Mehrzahl von Antriebsrädern 30, 31, 32, 33, 34, 35 gelagert. Das erste Teilgetriebe 26 weist eine Vorgelegewelle 36 auf. An der Vorgelegewelle 36 sind angetriebene Räder 38, 39, 40, 41, 42, 43 gelagert. Die angetriebenen Räder 38 bis 43 sind als Losräder ausgebildet.

Die angetriebenen Räder 38 bis 43 sind mittels nicht dargestellten Schaltmitteln mit der Vorgelegewelle 36 verbindbar. Die angetriebenen Räder 38 bis 43 und die Antriebsräder 30 bis 35 bilden Radpaare, die unterschiedliche Übersetzungen aufweisen, so dass durch selektives Verbinden der angetriebenen Räder 38 bis 43 mit der Vorgelegewelle 36 unterschiedliche Gangstufen realisiert werden können.

Das zweite Teilgetriebe 28 weist eine Eingangswelle 46 auf. An der Eingangswelle 46 sind Antriebsräder 48, 49, 50 gelagert. Die Antriebsräder 48 bis 50 sind als Losräder ausgebildet. Die Antriebsräder 48 bis 50 sind mittels Schaltmitteln mit der Eingangswelle 46 drehfest verbindbar. An der Ausgangswelle 22 sind die angetriebenen Räder 52, 53, 54 gelagert. Die angetriebenen Räder 52 bis 54 stehen in kämmendem Eingriff mit den Antriebsrädern 48 bis 50.

Durch die miteinander kämmenden angetriebenen Räder 52 bis 54 und Antriebsräder 48 bis 50 werden Radpaare gebildet, die unterschiedliche Übersetzungen aufweisen. Die Antriebsräder 48 bis 50 sind mittels nicht dargestellten Schaltmitteln mit der Eingangswelle 46 drehfest verbindbar, wodurch unterschiedliche, wählbare Gangstufen des zweiten Teilgetriebes 28 gebildet werden.

Die Vorgelegewelle 36 des ersten Teilgetriebes 26 ist drehfest mit der Eingangswelle des zweiten Teilgetriebes 28 verbunden. Vorzugsweise ist die Vorgelegewelle 36 mit der Eingangswelle 46 einstückig ausgebildet.

Vorzugsweise sind die Antriebsräder 30 bis 35 mit der Eingangswelle 20 jeweils mittels einer nicht dargestellten Kupplung kraftschlüssig und insbesondere mittels einer Reibkupplung reibschlüssig verbunden. Die Kupplung ist dazu ausgelegt, ein in die Getriebeeinheit 10 eingeleitetes Drehmoment zu begrenzen. Die Kupplung ist dazu ausgelegt, dass, sofern ein vordefiniertes oder einstellbares Drehmoment überschritten wird, die Verbindung zwischen der Eingangswelle 20 und dem entsprechenden Antriebsrad 30 bis 35 schlupft. Durch eine derartige Drehmomentbegrenzung kann die Baugröße und das Gewicht der Getriebeeinheit reduziert werden, da die Getriebeeinheit auf ein geringeres maximales Drehmoment ausgelegt werden kann.

Dadurch, dass das erste Teilgetriebe 26 mit dem zweiten Teilgetriebe 28 verbunden ist, multiplizieren sich die möglichen realisierbaren Gangstufen des ersten Teilgetriebes 26 mit den Gangstufen des zweiten Teilgetriebes 28. Somit sind durch die in Fig. 2 dargestellte Getriebeeinheit 10 achtzehn Gänge realisierbar.

Weiterhin ist es denkbar, dass die Eingangswelle 20 mittels einer nicht dargestellten Kupplung mit der Ausgangswelle 22 drehfest verbindbar ist. Dadurch wäre ein weiterer Gang als Direktgang realisierbar.

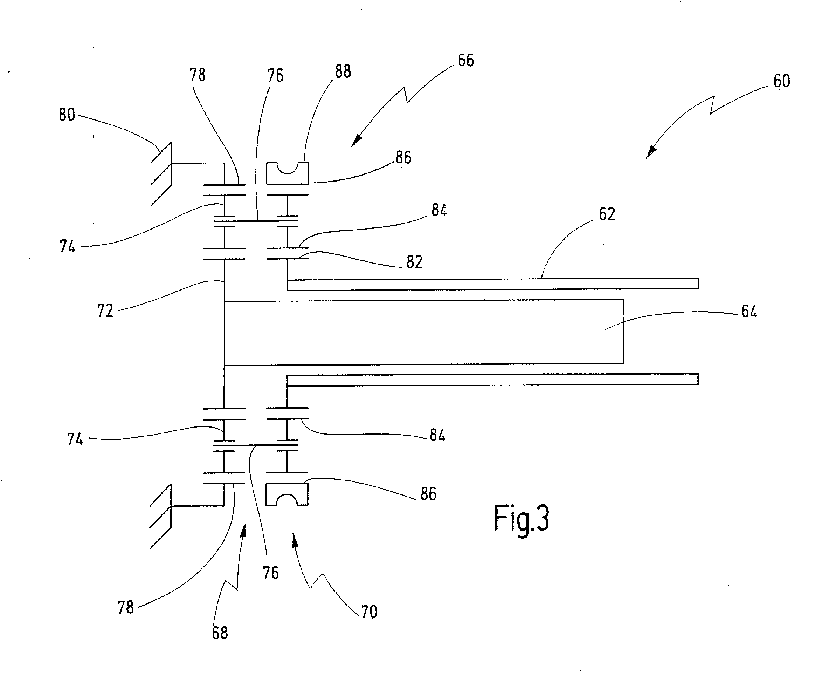

In Fig. 3 ist ein Schaltplan einer Schaltvorrichtung mit drehbarer Nockenwelle schematisch dargestellt. In Fig. 3 ist eine Schaltvorrichtung allgemein mit 60 bezeichnet.

Die Schaltvorrichtung 60 dient im Allgemeinen dazu, auf einer Welle 62 gelagerte, nicht dargestellte Losräder mittels nicht dargestellten Schaltmitteln selektiv mit der Welle 62 drehfest zu verbinden. Die Schaltvorrichtung 60 weist eine Nockenwelle 64 auf, die koaxial in der Welle 62 angeordnet und relativ zu dieser drehbar gelagert ist. An einem axialen Ende der Welle 62 ist ein Drehzahlüberlagerungsgetriebe 66 angeordnet, das sowohl mit der Welle 62 als auch mit der Nockenwelle 64 verbunden ist. Das Drehzahlüberlagerungsgetriebe 66 ist koaxial zu der Welle 62 angeordnet. Das Drehzahlüberlagerungsgetriebe 66 ist gebildet durch eine Übertragungsstufe 68 und einer Steuerungsstufe 70. Die Steuerungsstufe 70 ist mit der Welle 62 verbunden und die Übertragungsstufe 68 ist mit der Nockenwelle 64 verbunden. Alternativ kann auch die Steuerstufe 70 mit der Nockenwelle 64 und die Übertragungsstufe 68 mit der Welle 62 verbunden sein. Die Übertragungsstufe 68 ist durch ein erstes Planetengetriebe 68 gebildet. Die Steuerungsstufe 70 ist durch ein zweites Planetengetriebe 70 gebildet. Das erste Planetengetriebe 68 weist ein Sonnenrad 72 auf, das mit der Nockenwelle 64 drehfest verbunden ist. Das erste Planetengetriebe 68 weist Planetenräder 74 auf, die an einem Planetenträger 76 gelagert sind. Die Planetenräder 74 kämmen mit dem Sonnenrad 72. Das erste Planetengetriebe 68 weist ein Hohlrad 78 auf, mit dem die Planetenräder 74 kämmen. Das Hohlrad 78 ist an einem festen Bezugspunkt 80, vorzugsweise einem nicht dargestellten Getriebekäfig bzw. Getriebegehäuse festgelegt und mit diesem drehfest verbunden.

Das zweite Planetengetriebe 70 weist ein Sonnenrad 82 auf, das mit der Welle 62 drehfest verbunden ist. Das zweite Planetengetriebe 70 weist Planetenräder 84 auf, die an dem Planetenträger 76 gelagert sind. Die Planetenräder 84 kämmen mit dem Sonnenrad 82. Das zweite Planetengetriebe 70 weist ein Hohlrad 86 auf, mit dem die Planetenräder 84 kämmen. Das Hohlrad 86 ist mit einer Zugscheibe 88 drehfest verbunden, an der ein nicht dargestellter Bowdenzug befestigt werden kann.

Das erste Planetengetriebe 68 und das zweite Planetengetriebe 70 sind derart dimensioniert, dass bei stillstehendem bzw. festgehaltenem Hohlrad 86 die Übersetzung von der Welle 62 auf die Nockenwelle 64 gerade 1 ist, so dass in diesem Fall die Welle 62 und die Nockenwelle 64 synchron bzw. mit derselben Drehzahl rotieren. Das zweite Planetengetriebe 70 bzw. die Steuerungsstufe 70 dient dazu, eine zusätzliche Drehzahl der Drehzahl der Welle 62 zu überlagern. Diese zusätzliche Drehzahl wird über das Hohlrad 86 auf den Planetenträger 76 übertragen. Dadurch, dass die Planetenräder 84 des zweiten Planetengetriebes 70 und die Planetenräder 74 des ersten Planetengetriebes 68 über einen Planetenträger 76 miteinander verbunden sind, wird eine Gesamtdrehzahl als Summe aus der Drehzahl der Welle 62 und der Drehung des Hohlrades 86 auf das erste Planetengetriebe 68 übertragen. Das erste Planetengetriebe 68 bzw. die Übertragungsstufe 68 dient dazu, die Gesamtdrehzahl auf die Nockenwelle 64 zu übertragen. Das Hohlrad 86 ist mit der Zugscheibe 88 drehfest verbunden, um mittels eines nicht dargestellten Bowdenzuges betätigt zu werden. Dabei wird die Zugscheibe 88 um einen bestimmten Drehwinkel in Richtung der Rotation der Welle 62 oder entgegen der Rotationsrichtung der Welle 62 rotiert, um diese Relativbewegung auf die Nockenwelle 64 zu übertragen. Dadurch können die Gänge der Getriebeeinheit 10 durch Betätigen des Bowdenzuges geschaltet werden. Das Sonnenrad 62 ist vorzugsweise als Teil der Welle 62 bzw. einstückig mit der Welle 62 ausgebildet.

In einer alternativen Ausführungsform sind die beiden Hohlräder 78, 86 frei drehbar gelagert und miteinander drehfest verbunden. In dieser Ausführungsform sind die Planetenräder 74, 84 jeweils mittels eines separaten Planetenträgers verbunden. Einer der Planetenträger ist dabei mit der Zugscheibe 88 verbunden, um die Rotation der Zugscheibe 88 auf die Nockenwelle 64 zu übertragen.

In einer alternativen Ausführungsform ist es auch denkbar, dass die Sonnenräder miteinander drehfest verbunden und frei drehbar gelagert sind. Dabei wären die Welle 62 mit dem Planetenträger der Planetenräder 84 und die Nockenwelle 64 mit dem Planetenträger der Planetenräder 74 verbunden.

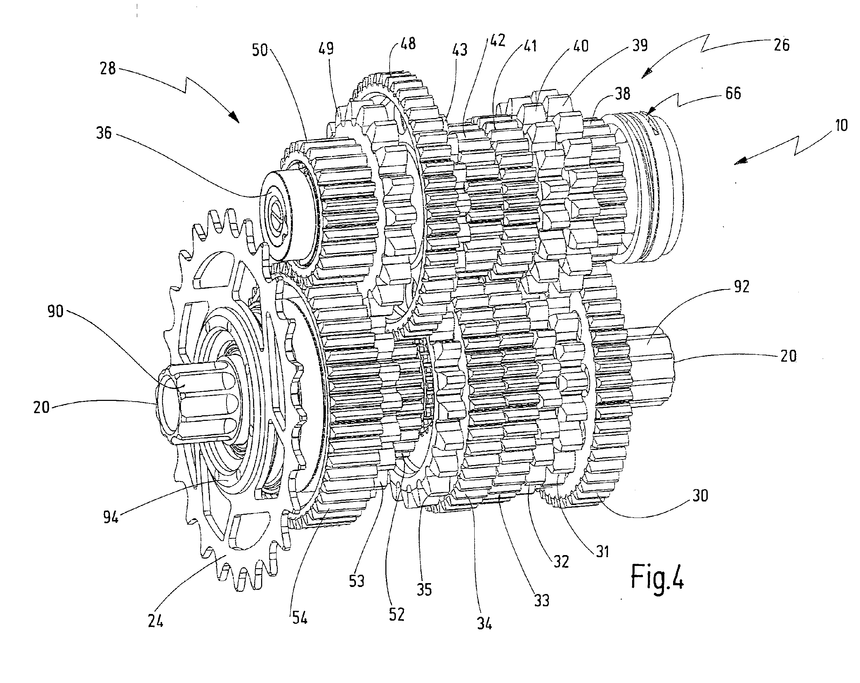

In Fig. 4 ist eine perspektivische Darstellung der Getriebeeinheit 10 gezeigt. Die Getriebeeinheit 10 entspricht dem Schaltplan gemäß Fig. 2, wobei gleiche Elemente mit gleichen Bezugsziffern bezeichnet sind und hier lediglich die Unterschiede erläutert sind.

Die Eingangswelle 20 weist an ihren axialen Enden Verbindungsabschnitte 90, 92 auf, um nicht dargestellte Tretkurbeln mit der Eingangswelle 20 drehfest zu verbinden. An einem axialen Ende der nicht dargestellten Ausgangswelle 22 ist das Kettenblatt 24 gelagert. Das Kettenblatt 24 ist mittels einer Zentralschraube 94 mit einem nicht dargestellten Verbindungselement verbunden und dadurch mit der Ausgangswelle 22 drehfest verbunden.

Die Vorgelegewelle 36 ist parallel zu der Eingangswelle 20 angeordnet. An der Vorgelegewelle 36, die einstückig mit der Eingangswelle 46 des zweiten Teilgetriebes 28 ausgebildet ist, sind die Losräder 38 bis 43 und 48 bis 50 gelagert. An einem axialen Ende der Vorgelegewelle 36 ist das Drehzahlüberlagerungsgetriebe 66 gelagert. Die Losräder 38 bis 43 und 48 bis 50 sind über die nicht dargestellte Nockenwelle 64 in Verbindung mit den nicht dargestellten Schaltmitteln mit der Vorgelegewelle 36 verbindbar bzw. schaltbar, wobei die Nockenwelle 64 mittels des Drehzahlüberlagerungsgetriebes 66 relativ zu der Vorgelegewelle 36 drehbar ist.

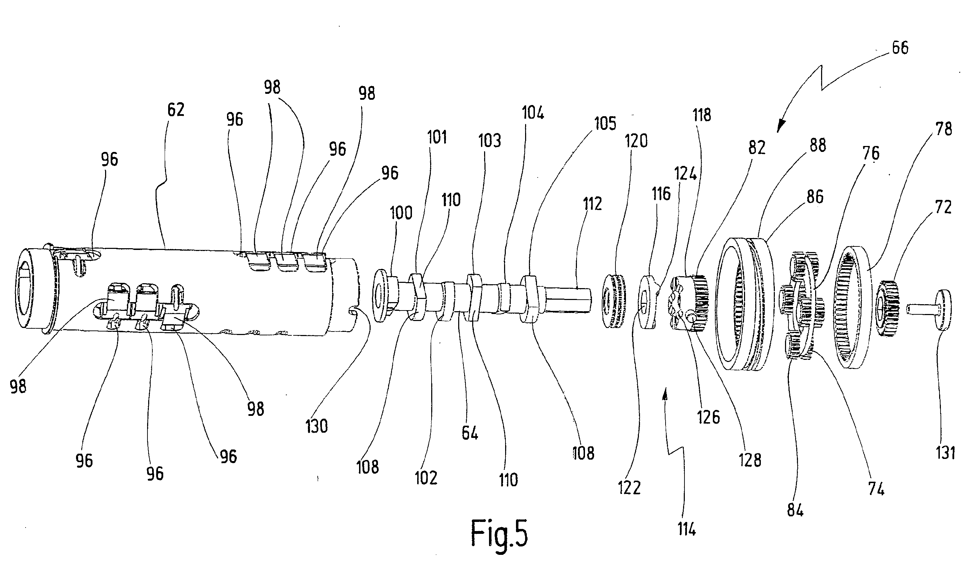

Fig. 5 zeigt eine Explosionsdarstellung der Welle 62, der Nockenwelle 64 und des Drehzahlüberlagerungsgetriebes 66. Gleiche Elemente sind mit gleichen Bezugsziffern versehen, wobei hier lediglich die Unterschiede erläutert sind.

Die Welle 62 weist Ausnehmungen 96 auf, in denen Freilaufkörper 98 bzw. Schaltklinken 98 gelagert sind. Die Schaltklinken 98 dienen als Schaltmittel, um die an der Welle 62 gelagerten Losräder 38 bis 43 und 48 bis 50 mit der Welle 62 drehfest zu verbinden. Die Funktion der Schaltklinken 98 ist im Weiteren näher erläutert.

Die Nockenwelle 64 weist Betätigungselemente 100, 101, 102, 103, 104, 105 auf, die jeweils einer bzw. zwei der Schaltklinken 98 zugeordnet sind. Die Betätigungselemente 100 bis 105 weisen jeweils einen Gleitabschnitt 108 und eine Nocke 110 bzw. zwei Nocken 110 auf. Die Gleitabschnitte 108 sind als runde Abschnitte ausgebildet, die koaxial zu einer Rotationsachse der Nockenwelle 64 ausgebildet sind. Die Nocken 110 sind als Ausnehmungen an den Betätigungselementen 100 bis 105 ausgebildet. Die Ausnehmungen sind als ebene Fläche der Betätigungselemente 100 bis 105 ausgebildet, die in einer Axialprojektion der Betätigungselemente 100 bis 105 die Form einer Sekante bilden. An einem axialen Ende der Nockenwelle 64 ist ein Verbindungsabschnitt 112 ausgebildet. Der Verbindungsabschnitt 112 weist ein Sechskantprofil 112 auf.

Der Nockenwelle 64 sind Rastmittel 114 zugeordnet. Die Rastmittel 114 weisen ein erstes Rastglied 116 und ein zweites Rastglied 118 auf. Ferner weisen die Rastmittel 114 ein Federelement 120 auf, das zwischen dem Betätigungselement 105 der Nockenwelle 64 und dem ersten Rastglied 116 angeordnet ist. Das Federelement 120 ist vorzugsweise als Tellerfederpaket ausgebildet. Das erste Rastglied 116 weist ein Innensechskantprofil 122 auf, das mit dem Sechskantprofil des Verbindungsabschnitts 112 drehfest und axial verschieblich verbindbar ist. Das erste Rastglied 116 ist als eine Scheibe ausgebildet. Das Rastglied 116 weist wenigstens einen Vorsprung 124 bzw. wenigstens eine Nase 124 auf, die in axialer Richtung gegenüber dem ersten Rastglied 116 hervorsteht. Das zweite Rastglied 118 weist eine Zylinderform auf und ist an einem axialen Ende, das dem ersten Rastglied 116 zugewandt ist, mit Ausnehmungen 126 bzw. Nuten 126 versehen. Das zweite Rastglied 118 weist wenigstens einen radial gegenüber der Umfangsfläche hervorstehenden Stift 128 auf, der im zusammengesetzten Zustand der Welle 62 in eine Ausnehmung 130 der Welle 62 greift und das zweite Rastglied 118 mit der Welle 62 drehfest verbindet. Das zweite Rastglied 118 weist ferner eine Außenverzahnung auf, die das Sonnenrad 82 des zweiten Planetengetriebes 70 bildet. Alternativ zu der Nase 124 und den Nuten 126 können die Rastmittel 114 auch als federbelastete Kugeln ausgebildet sein.

Das Sonnenrad 72 des ersten Planetengetriebes 68 weist ein Innensechskantprofil auf, das dem Sechskantprofil 112 entspricht. Ferner ist in Fig. 5 ein Abschlusselement 131 dargestellt, das mit einem axialen Ende der Nockenwelle 64 verbindbar ist und das Drehzahlüberlagerungsgetriebe 66 in axialer Richtung abstützt und das erste Rastglied 116, das zweite Rastglied 118, das Federelement 120 und das Sonnenrad 72 gegeneinander vorspannt.

Die Betätigungselemente 100 bis 105 der Nockenwelle 64 sind jeweils einer der Schaltklinken 98 zugeordnet, so dass die Schaltklinken 98 durch eine Relativverdrehung der Nockenwelle 64 gegenüber der Welle 62 selektiv betätigbar sind. Dabei betätigt der jeweilige Gleitabschnitt 108 die Schaltklinken 98 derart, dass das zugeordnete Losrad auf der Welle 62 gleitet, das heißt der entsprechende Gang nicht eingelegt ist. Die jeweilige Nocke 110 bewirkt, dass die entsprechende Schaltklinke 98 nach radial außen schwenkt und das zugeordnete Losrad mit der Welle 62 drehfest verbindet. Die Nocken 110 der Betätigungselemente 100 bis 105 sind jeweils an unterschiedlichen Umfangspositionen der Nockenwelle 64 ausgebildet, so dass jeweils nur eine Schaltklinke 98 oder aber zwei oder mehr Schaltklinken 98 gleichzeitig betätigt werden und das entsprechende Losrad bzw. eines der entsprechenden Losräder wenigstens in einer Drehrichtung mit der Welle 62 drehfest verbunden werden. Die Betätigungselemente 100 bis 105 können eine oder zwei Nocken 110 aufweisen entsprechend der Anzahl der ihnen zugeordneten Schaltklinken 98. Die Nockenwelle 64 weist das Sechskantprofil 112 an einem axialen Ende auf, um weitere Elemente drehfest und axial beweglich zu lagern.

Die Rastmittel 114 weisen das erste Rastglied 116 auf, das durch das Innensechskantprofil 122 auf dem Verbindungsabschnitt 112 axial beweglich gelagert ist. Das zweite Rastglied 118 ist drehfest verbunden mit der Welle 62, indem der Stift 128 in die Ausnehmung 130 der Welle 62 greift. An dem zweiten Rastglied 118 sind an unterschiedlichen Winkelpositionen die Ausnehmungen 126 gebildet, in die die Nasen 124 des ersten Rastgliedes 116 eingreifen können. Das erste Rastglied 116 wird durch das Federelement 120 in axialer Richtung, und zwar in Richtung des Rastgliedes 118 vorgespannt. Die Ausnehmungen 126 sind derart an dem zweiten Rastglied 118 ausgebildet, dass die Nasen 124 in die Ausnehmungen 126 eingreifen können und die Nockenwelle 64 relativ zu der Welle 62 in bestimmten Rotationspositionen festlegen bzw. fixieren. Die Rotationspositionen sind derart ausgewählt, dass sie den bestimmten Schaltzuständen der Nockenwelle 64 entsprechen. Die Nasen 124 und die Ausnehmungen 126 sind mit abgeschrägten bzw. abgerundeten Flanken ausgebildet, damit bei dem Aufbringen eines Drehmoments auf die Rastmittel das erste Rastglied durch eine axiale Bewegung aus der Rastposition bewegt und die Nockenwelle 64 relativ zu der Welle 62 rotiert werden kann. Wenn über die Zugscheibe 88 eine Drehung auf das Hohlrad 86 übertragen wird, wird ein Drehmoment auf die Rastmittel 114 ausgeübt. Dadurch wird das erste Rastglied 116 in axialer Richtung von dem zweiten Rastglied 118 wegbewegt bis die Nasen 124 aus der Ausnehmung 126 herausbewegt sind, so dass die Nockenwelle 64 eine Relativdrehung zu der Welle 62 ausführen kann. Das erste Rastglied 116 wird dann relativ zu dem zweiten Rastglied 118 verdreht bis die Nasen 124 in weitere der Ausnehmungen 126 eingleiten und durch die durch das Federelement 120 aufgebrachte Kraft in die Ausnehmung 126 einrasten. Durch die Rastmittel 114 kann die Nockenwelle 64 in genauen vordefinierten Schaltpositionen fixiert bzw. gehalten werden. Dadurch kann auf externe Rastvorrichtungen, wie z.B. in einem Schalthebel, verzichtet werden.

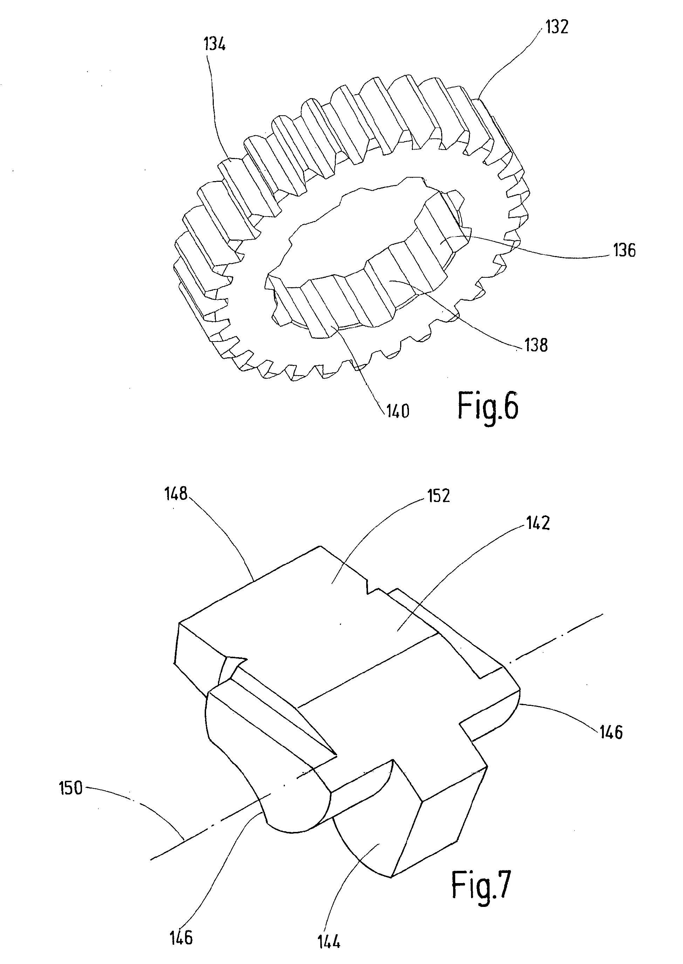

In Fig. 6 ist ein schaltbares Losrad mit Innenverzahnung dargestellt und allgemein mit 132 bezeichnet.

Das Losrad 132 weist eine Außenverzahnung 134 und eine Innenverzahnung 136 auf. Die Außenverzahnung 134 ist an der äußeren Umfangsfläche gebildet. Die Innenverzahnung ist an einer inneren Umfangsfläche des Losrades 132 gebildet. Die Innenverzahnung 136 weist Gleitabschnitte 138 und Eingriffsabschnitte 140 auf. Die Gleitabschnitte 138 sind gebildet durch in Umfangsrichtung des Losrades 132 ausgebildete Flächen. Zwischen den Gleitabschnitten 138 sind in einem Winkel zu den Gleitabschnitten 138 die Eingriffsabschnitte 140 ausgebildet.

Die Außenverzahnung 134 dient dazu mit anderen Zahnrädern zu kämmen. Die Innenverzahnung 136 dient dazu, das Losrad 132 an der Welle 62 zu lagern und mittels Schaltmitteln mit der Welle 62 drehfest zu verbinden. Dabei dienen die Gleitabschnitte 138 dazu, das Losrad 132 an der Welle 62 drehbar zu lagern und auf der Welle 62 zu gleiten. Die Eingriffsabschnitte 140 dienen dazu, dass nicht dargestellte Schaltmittel, die im Weiteren näher erläutert werden, mit dem Losrad 132 in Eingriff gebracht werden können und das Losrad 132 drehfest mit der Welle 62 zu verbinden.

In Fig. 7 ist ein Freilaufkörper bzw. eine Schaltklinke zum drehfesten Verbinden des Losrades 132 mit der Welle 62 dargestellt und allgemein mit 142 bezeichnet. Der Freilaufkörper 142 weist einen Betätigungsabschnitt 144 auf, der an einer Unterseite des Freilaufkörpers 142 gebildet ist. Der Freilaufkörper 142 weist an zwei seitlichen Abschnitten jeweils einen Lagerungsabschnitt 146 auf. Der Freilaufkörper 142 weist einen Eingriffsabschnitt 148 auf. Der Eingriffsabschnitt 148 ist an einem dem Betätigungsabschnitt 144 gegenüberliegenden Ende des Freilaufkörpers 142 gebildet. Die Lagerungsabschnitte 146 sind an gegenüberliegenden Seiten des Freilaufkörpers 142 ausgebildet, und zwar zwischen dem Betätigungsabschnitt 144 und dem Eingriffsabschnitt 148.

Die Lagerungsabschnitte 146 dienen dazu, den Freilaufkörper 142 an einer Welle um eine Drehachse 150 drehbar bzw. schwenkbar zu lagern. Dabei wird der Freilaufkörper 142 an der Welle derart gelagert, dass der Betätigungsabschnitt 144 zum Inneren der Welle weist. Ferner ist der Freilaufkörper 142 mittels eines Federelementes derart vorgespannt, dass der Betätigungsabschnitt 144 im unbelasteten Zustand nach radial innen geschwenkt wird und der Eingriffsabschnitt 148 nach radial außen geschwenkt wird. Der Betätigungsabschnitt 144 dient dazu, mittels des Gleitabschnitts 108 der Nockenwelle 64 nach radial außen gedrückt zu werden, um den Eingriffsabschnitt 148 um die Drehachse 150 nach radial innen zu schwenken.

Sofern der Eingriffsabschnitt 148 nach radial außen geschwenkt ist und gegenüber der Welle hervorsteht, kann er mit dem Eingriffsabschnitt 140 der Innenverzahnung 136 des Losrades 132 in einer Drehrichtung des Losrades 132 in Eingriff gebracht werden und so das Losrad mit der Welle in der Drehrichtung drehfest verbinden.

Der Freilaufkörper 142 weist ferner einen Gleitabschnitt 152 auf. Der Gleitabschnitt 152 dient dazu, den Freilaufkörper 142 nach radial innen zu schwenken, sofern das Losrad relativ zu der Welle in einer der Drehrichtung entgegengesetzten Richtung gedreht wird und so als Freilauf dient.

Der Betätigungsabschnitt 144 kann eine senkrecht zu der Drehachse 150 bzw. in Drehrichtung der Welle verlaufende Nut aufweisen, um ein Federelement zum Vorspannen des Freilaufkörpers 142 aufzunehmen. Dies ist im Weiteren näher erläutert.

Die Schaltklinke 98 entspricht im Wesentlichen dem Freilaufkörper 142, so dass im Weiteren in Bezug auf identische Elemente auf die Ausführungen zu dem Freilaufkörper 142 verwiesen wird.

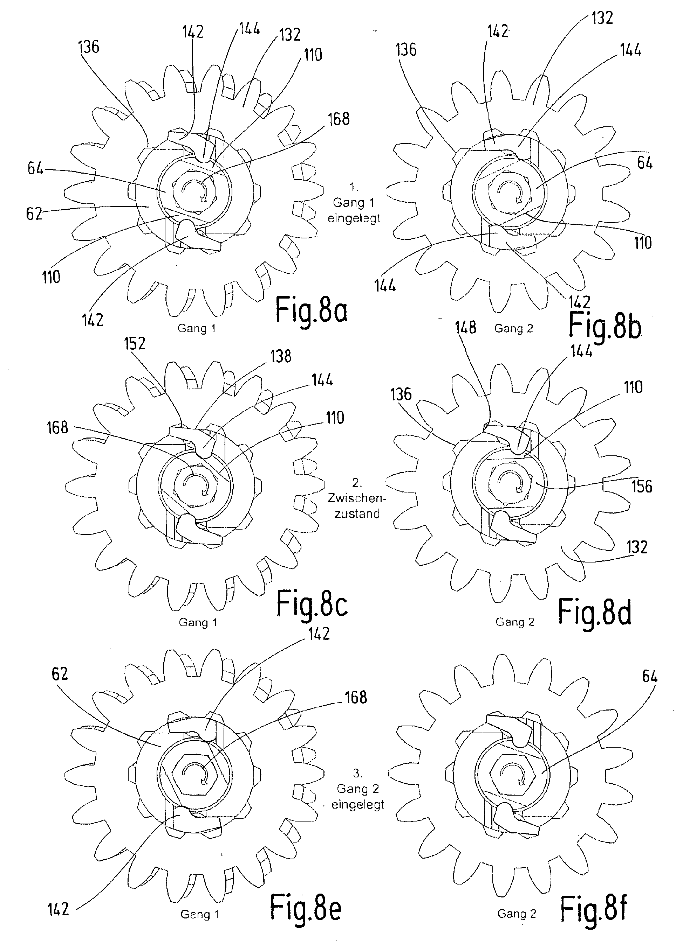

In den Figuren 8A bis 8F ist schematisch ein Gangwechsel dargestellt. Dazu sind radiale Schnittansichten durch benachbarte Losräder 132 gezeigt, während dreier Phasen des Gangwechsels.

Fig. 8A zeigt ein erstes der Losräder 132, dessen Innenverzahnung 136 mit den zwei zugeordneten Freilaufkörpern 142 in Eingriff steht. Die Nockenwelle 64 ist relativ zu der Welle 62 in einer Rotationsposition derart positioniert, dass die Nocken 110 der Nockenwelle 64 im Bereich der Betätigungsabschnitte 144 der Freilaufkörper 142 angeordnet ist und so der Freilaufkörper 142 nach außen schwenken kann.

Das zweite der Losräder 132, das einer nächst höheren Gangstufe, und zwar dem zweiten Gang, zugeordnet ist, ist in Fig. 8B gezeigt. Die Freilaufkörper 142 sind radial nach innen eingeschwenkt und stehen folglich nicht mit der Innenverzahnung 136 des Losrades 132 in Eingriff. In der Rotationsposition der Nockenwelle 64 sind die Nocken 110, die dem zweiten Gang zugeordnet sind, nicht unter den Betätigungsabschnitten 144 der Freilaufkörper 142 angeordnet, so dass die Betätigungsabschnitte 144 nach außen gedrückt werden.

Wird die Nockenwelle 64 verdreht, wie es durch einen Pfeil 168 angedeutet ist, so bleiben die Nocken 110 unterhalb der Freilaufkörper 142, die dem ersten der Losräder 132 und somit dem ersten Gang zugeordnet sind, wie es in Fig. 8C dargestellt ist, so dass die Freilaufkörper 142 des ersten Gangs nach außen ausgeschwenkt bleiben.

In Fig. 8D ist das zweite der Losräder 132 in dieser Rotationsposition der Nockenwelle 64 dargestellt, das dem zweiten Gang zugeordnet ist. In dieser Rotationsposition der Nockenwelle 64 sind die Nocken 110, die dem zweiten Gang zugeordnet ist, radial unterhalb der Betätigungsabschnitte 144 der Freilaufkörper 142 des zweiten Gangs angeordnet, so dass die Betätigungsabschnitte 144 nach radial innen einschwenken und somit die Eingriffsabschnitte 148 nach radial außen ausschwenken können. Dadurch können die Eingriffsabschnitte 148 mit der Innenverzahnung 136 des Losrades 132 in Eingriff gebracht werden. Den Freilaufkörpern 142 ist jeweils eine nicht dargestellte Feder zugeordnet, die den entsprechenden Freilaufkörper 142 so vorspannt, dass der Betätigungsabschnitt 144 gegen die Nockenwelle 64 gedrückt wird. Dadurch schwenkt der Eingriffsabschnitt 148 nach radial außen, sofern eine der Nocken 110 unter die Schaltklinke 142 gedreht wird.

Da die höhere Gangstufe ein kleineres Übersetzungsverhältnis aufweist, greifen die Freilaufklinken 142 des höheren Ganges in die Innenverzahnung 136 ein und treiben die Welle 62 mit einer Rotationsgeschwindigkeit an, die größer ist als die Rotationsgeschwindigkeit des Losrades 132 des niedrigeren Ganges. Daher wird das Losrad 132 des niedrigeren Ganges in diesem sogenannten Zwischenzustand relativ zu der Welle 62 in entgegengesetzter Richtung rotiert. Dadurch drückt der Gleitabschnitt 138 des Losrades 132 gegen den Gleitabschnitt 152 des Freilaufkörpers 142, so dass der Freilaufkörper 142 nach innen ausgelenkt wird und das erste der Losräder 132 auf der Welle 62 gleitet. Das Losrad 132 des niedrigeren Ganges, also des ersten Ganges, befindet sich in dem Zwischenzustand im Freilauf.

In den Figuren 8E und 8F ist der Zustand dargestellt, in dem der zweite Gang vollständig eingelegt ist. Dazu ist die Nockenwelle 64 in Richtung des Pfeils 168 weitergedreht worden, so dass die Freilaufkörper 142 des ersten Gangs durch die Nockenwelle 64 eingeschwenkt sind, wie es in Fig. 8E gezeigt ist. In Fig. 8F ist gezeigt, dass die Freilaufkörper 142 des zweiten Gangs weiterhin mit der Innenverzahnung 136 in Eingriff stehen; weil die Nocken 110 des zweiten Gangs unterhalb der Betätigungsabschnitte 144 der Freilaufkörper 142 angeordnet sind.

Durch den Zwischenzustand, in dem die Freilaufkörper 142 von zwei aufeinander folgenden Gängen radial ausgeschwenkt sind, ist ein Schalten unter Last möglich. Ferner wird ein Leerlaufzustand vermieden.

Beim Schalten in einen niedrigen Gang gleitet zunächst in dem Zwischenzustand der Gleitabschnitt 138 der Innenverzahnung 136 des niedrigeren Ganges über die Freilaufkörper 142 hinweg. Der höhere Gang bleibt zunächst eingeschaltet. Die Freilaufkörper 142 werden erst dann eingeschwenkt bzw. ausgelegt, wenn die Last, die über das Losrad 132 auf die Welle 154 übertragen wird, zurückgenommen wird. Zusätzlich muss dann die Nockenwelle 64 weitergedreht werden, so dass der Betätigungsabschnitt 144 nach außen gedrückt wird. Der niedrigere Gang ist dann sofort eingelegt, weil sich dieser Gang bereits im Zwischenzustand bzw. im Freilaufzustand befand. Dadurch wird ein Leerlaufzustand vermieden.

In Fig. 8A bis 8F ist die Nockenwelle 64 mit genau gegenüberliegenden Nocken 110 dargestellt. Alternativ ist es auch denkbar, dass die Nocken 110 so relativ zueinander angeordnet sind, dass lediglich eine der Schaltklinken in Eingriff mit der Innenverzahnung 136 gebracht wird. Dies wird realisiert, indem die Schaltklinken 142 an der Welle 64 nicht genau gegenüberliegend angeordnet sind. Dadurch kann der Drehwinkel des Losrades 132 bis zum Einrasten des Betätigungsabschnittes 148 in die Innenverzahnung 136 verkleinert werden. In einer alternativen Ausführungsform ist einem Losrad lediglich eine Schaltklinke 142 und dem zugeordneten Betätigungselement lediglich eine Nocke 110 zugeordnet.

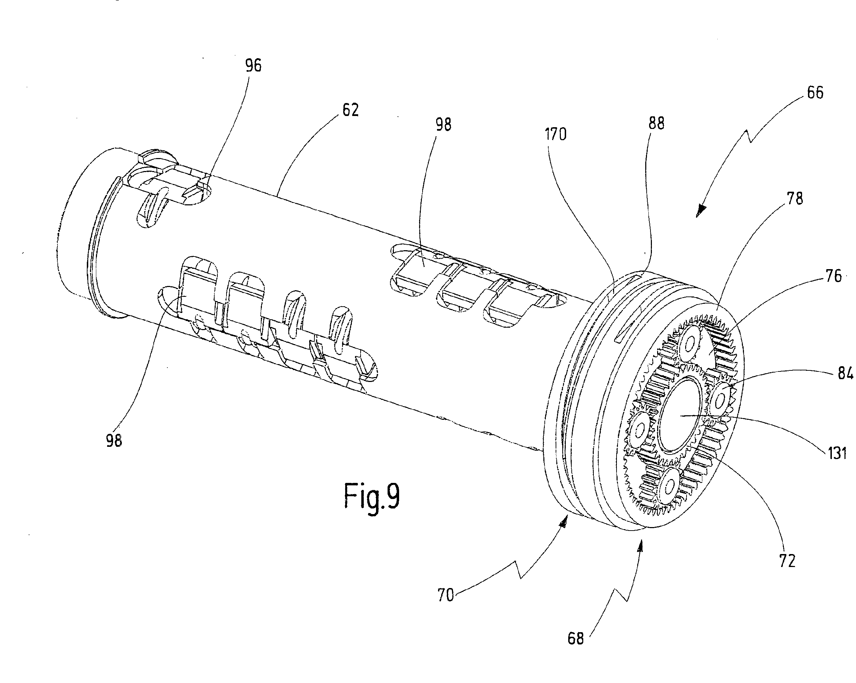

In Fig. 9 ist eine perspektivische Zusammenbauzeichnung der Elemente aus Fig. 5 dargestellt. Gleiche Elemente sind mit gleichen Bezugsziffern versehen, wobei hier lediglich die Besonderheiten erläutert sind.

Das Drehzahlüberlagerungsgetriebe 66 ist an einem axialen Ende der Welle 62 gelagert. Das erste Planetengetriebe 68 weist vier Planetenräder 84 auf, die an dem Planetenträger 76 gelagert sind. Die Planetenräder 76 stehen sowohl mit dem Sonnenrad 72 als auch mit dem Hohlrad 78 in Eingriff, so dass die Planetenräder 84 die Innenverzahnung des Hohlrades 78 umlaufen und gleichzeitig das Sonnenrad 72 umlaufen. Das hier nicht dargestellte Hohlrad 86 des zweiten Planetengetriebes 70 ist verbunden mit der Zugscheibe 88. Die Zugscheibe 88 weist umfänglich eine Rille 170 auf, in der ein nicht dargestellter Bowdenzug fixiert bzw. gelagert werden kann. Die Rille 170 ist in Form einer Spirale bzw. spiralförmig in der Zugscheibe 88 ausgebildet. Durch Ziehen des Bowdenzuges wird das Hohlrad 86 verdreht und wie oben beschrieben die Nockenwelle 64 relativ zu der Welle 62 rotiert.

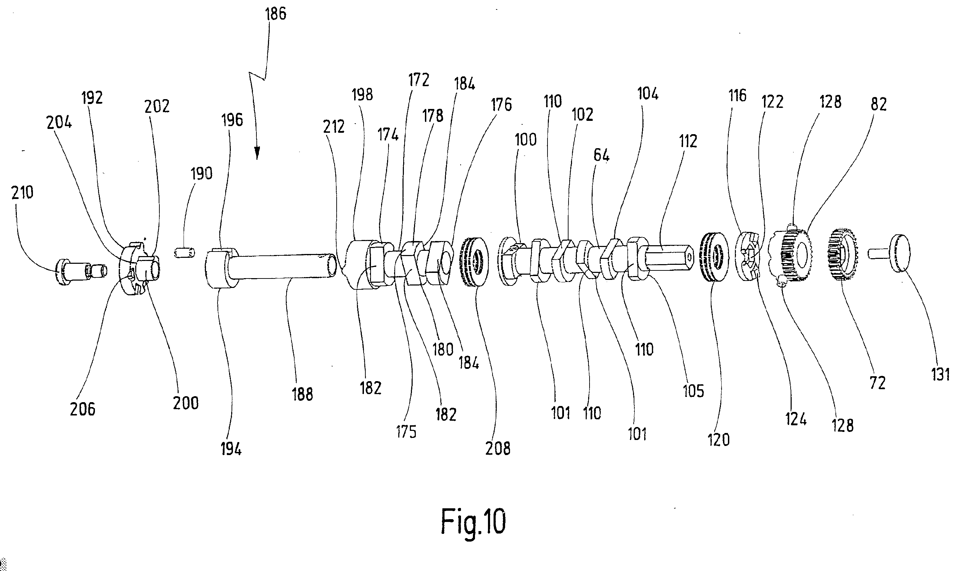

Fig. 10 zeigt eine Explosionsdarstellung von zwei Nockenwellen mit einem Mitnehmer. Die in Fig. 10 dargestellten Elemente entsprechen teilweise den Elementen aus Fig. 5, wobei gleiche Elemente mit gleichen Bezugsziffern versehen sind und hier lediglich die Unterschiede dargestellt sind.

Koaxial zu der Nockenwelle 64 ist eine zweite Nockenwelle 172 angeordnet und innerhalb der nicht dargestellten Welle 62 gelagert. Die zweite Nockenwelle 172 weist drei Betätigungselemente 174, 175, 176 auf. Die Betätigungselemente 174 bis 176 weisen jeweils zwei Gleitabschnitte 178, 180 und jeweils zwei Nocken 182, 184 auf. Die Gleitabschnitte 178, 180 sind als runde Abschnitte koaxial zu einer Drehachse der zweiten Nockenwelle 172 ausgebildet. Die Nocken 182, 184 sind als parallele Flächenabschnitte an den Betätigungselementen 174 bis 176 ausgebildet und bilden in axialer Blickrichtung der Betätigungselemente 174 bis 176 den Verlauf einer Sekante. Die Betätigungselemente 174, 175, 176 sind jeweils gegeneinander um 60° verdreht.

An einem axialen Ende der zweiten Nockenwelle 172 ist ein Mitnehmer 186 angeordnet. Der Mitnehmer 186 weist einen Schaltwalzenmitnehmer 188, ein Mitnehmerglied bzw. eine Schaltwalze 190 und eine Hubscheibe 192 auf. Der Schaltwalzenmitnehmer ist im zusammengebauten Zustand durch die zweite Nockenwelle 172 geführt bzw. in der zweiten Nockenwelle 172 gelagert und mit der ersten Nockenwelle 64 drehfest verbunden. Der Schaltwalzenmitnehmer 188 weist einen Mitnehmerabschnitt 194 auf, der an einem der ersten Nockenwelle 64 gegenüberliegenden axialen Ende des Schaltwalzenmitnehmers 188 angeordnet ist. Der Mitnehmerabschnitt 194 ist zylinderförmig mit einer radialen Ausnehmung ausgebildet, die eine Schaltwalzenaufnahme 196 bildet. Im zusammengebauten Zustand ist die Schaltwalze 190 in der Schaltwalzenaufnahme 196 aufgenommen. Die Schaltwalze 190 ist in der Schaltwalzenaufnahme 196 radial beweglich gelagert. Die Nockenwelle 172 weist an einem axialen Ende einen Hülsenabschnitt 198 auf, der im zusammengebauten Zustand den Mitnehmerabschnitt 194 umfänglich umgibt. Die Hubscheibe 192 weist einen zylinderförmigen Abschnitt auf, dessen äußere Umfangsfläche einen Gleitabschnitt 200 bildet. Der Gleitabschnitt 200 weist eine in radialer Richtung erhabene Nocke 202 auf. Im zusammengebauten Zustand ist der Gleitabschnitt 200 von dem Mitnehmerabschnitt 194 umfänglich umgeben. Im zusammengebauten Zustand gleitet die Schaltwalze 190 auf dem Gleitabschnitt 200. Die Hubscheibe 192 weist ferner einen Rastierungsabschnitt 204 mit mehreren Ausnehmungen 206 bzw. Nuten 206 auf. Der Hülsenabschnitt 198 weist ferner wenigstens eine Nase 212 auf, die gegenüber dem Hülsenabschnitt 198 in axialer Richtung hervorsteht. Der Rastierungsabschnitt 204 ist im zusammengebauten Zustand mit der Welle 62 drehfest verbunden. Zwischen der ersten Nockenwelle 64 und der zweiten Nockenwelle 172 ist ein Federelement 208 angeordnet, das die zweite Nockenwelle 172 in axialer Richtung gegenüber der Hubscheibe 192 vorspannt. Im zusammengebauten Zustand ist koaxial durch die Hubscheibe 192 eine Abschlussschraube 210 hindurchgeführt und mit dem Schaltwalzenmitnehmer 188 verbunden.

Die Betätigungselemente 174 bis 176 der zweiten Nockenwelle 172 dienen dazu, Schaltklinken 98 des zweiten Teilgetriebes 28 zu betätigen, um wenigstens eines der Losräder 48 bis 50 mit der Welle 62 drehfest zu verbinden. Die Nockenwelle 172 ist relativ zu der Welle 62 drehbar gelagert, um in unterschiedlichen Rotationspositionen unterschiedliche Schaltklinken 98 zu betätigen. So können einzelne Gangstufen des zweiten Teilgetriebes 28 realisiert werden. Die Betätigungselemente 174 bis 176 weisen die Gleitabschnitte 178, 180 auf, um die Schaltklinken 98 nach radial innen zu schwenken, so dass das entsprechende Losrad auf der Welle 62 gleitet. Die Nocken 182, 184 der Betätigungselemente 184 bis 186 dienen dazu, dass die Schaltklinken 98 nach radial außen schwenken und das entsprechende Losrad mit der Welle 62 drehfest verbinden.

Um die zweite Nockenwelle 172 zu rotieren, ist die zweite Nockenwelle 172 über den Mitnehmer 186 mit der ersten Nockenwelle 64 verbindbar. Der Schaltwalzenmitnehmer 188 ist koaxial in der zweiten Nockenwelle 172 gelagert und mit der ersten Nockenwelle 64 drehfest verbunden. Um den Schaltwalzenmitnehmer 188 mit der zweiten Nockenwelle 172 drehfest zu verbinden, ist in dem Mitnehmerabschnitt 194 die Schaltwalzenaufnahme 196 ausgebildet, in der die Schaltwalze 190 radial beweglich gelagert ist. Die Schaltwalze 190 gleitet auf dem Gleitabschnitt 200 der Hubscheibe 192. Dadurch, dass die Hubscheibe 192 drehfest mit der Welle 62 verbunden ist, wird der Mitnehmerabschnitt 194 bei jedem Schaltvorgang also bei jeder Drehbewegung der ersten Nockenwelle 64 relativ zu der Hubscheibe 192 rotiert. Wenn die Schaltwalze 190 über die Nocke 202 gleitet, wird die Schaltwalze 190 in der Schaltwalzenaufnahme 196 in radialer Richtung nach außen bewegt und greift in eine nicht dargestellte Ausnehmung an der inneren Umfangsfläche des Hülsenabschnitts 198, wodurch die Nockenwelle 172 relativ zu der Welle 62 mitgedreht wird. Wird der Schaltwalzenmitnehmer 188 weiter relativ zu der Hubscheibe 192 gedreht, gleitet die Schaltwalze 190 über die Nocke 202 hinweg und wird in radialer Richtung nach innen zu dem Gleitabschnitt 200 hin bewegt. Dadurch wird die Schaltwalze 190 außer Eingriff des Hülsenabschnitts 198 gebracht, wenn die Schaltwalze 190 über die Nocke 202 hinwegbewegt ist. Der Mitnehmer 186 bewirkt folglich, dass nach jeder Drehung der ersten Nockenwelle 64 um 360° die zweite Nockenwelle 172 um eine vordefinierte Winkeldrehung, in diesem Fall 60°, rotiert wird. Für die Getriebeeinheit 10 bedeutet das, dass nach dem höchsten Gang des ersten Teilgetriebes 26 durch Weiterdrehen der ersten Nockenwelle 64 der zweite Gang des zweiten Teilgetriebes 28 eingelegt wird und gleichzeitig der erste Gang des ersten Teilgetriebes 26 eingelegt wird. Das bedeutet wiederum, dass auf den sechsten Gang der Getriebeeinheit 10 der siebte Gang folgt. Dadurch können alle 18 Gänge der Getriebeeinheit 10 durch Rotieren der Zugscheibe 88 durchgeschaltet werden. Diese logische Verknüpfung der ersten Nockenwelle 64 mit der zweiten Nockenwelle 172 ermöglicht ein komfortables Durchschalten aller Gänge mit nur einem Schalthebel. Es versteht sich, dass der Mitnehmer 186 auch reversibel, also in die entgegengesetzte Richtung, verwendbar ist und so alle 18 Gänge durch Rotieren der Zugscheibe 88 zurückgeschaltet werden können.

Der Rastierungsabschnitt 204 mit den Ausnehmungen 206 dient dazu, die Nase 212 in eine der Ausnehmungen 206 einrasten zu lassen und so die zweite Nockenwelle 172 in verschiedenen Rotationspositionen relativ zu der Welle 62 zu verrasten. Um ein Herausgleiten der Nase 212 aus den Ausnehmungen 206, also ein Lösen der Verrastung, zu ermöglichen, sind Flanken der Nase 212 und der Ausnehmungen 206 angeschrägt bzw. abgerundet, so dass bei Aufbringen eines Relativmomentes zwischen der Welle 62 und der Nockenwelle 172 die Nase 212 aus der entsprechenden Ausnehmung 206 gleiten kann. Dazu ist die Nockenwelle 172 axial verschieblich gelagert und mittels des Federelementes 208 gegenüber der ersten Nockenwelle 64 abgestützt bzw. axial vorgespannt.

Die Betätigungselemente 174 bis 176 weisen jeweils zwei Nocken 182, 184 auf. Dadurch können zwei Schaltklinken 98 einem der Losräder 48 bis 50 zugeordnet werden und von der zweiten Nockenwelle 172 betätigt werden. Dies hat den Vorteil, dass von dem zweiten Teilgetriebe 28 größere Drehmomente aufgenommen werden können. Die Betätigungselemente 174 bis 176 sind jeweils gegeneinander um 60° verdreht, weil sie jeweils zwei Nocken 110 aufweisen und somit sich die Nockenwelle 172 nach einer Drehung um 180° wieder in einer der Ausgangsrotationsposition entsprechenden Rotationsposition befindet.

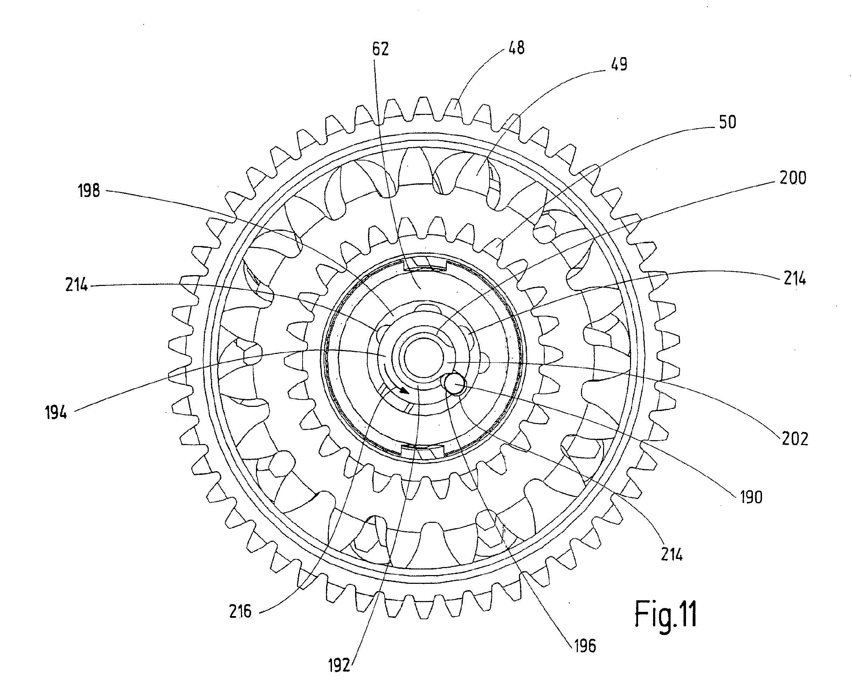

Fig. 11 zeigt eine schematische Darstellung der Welle 62 in axialer Blickrichtung zur Erläuterung des Mitnehmers 186. Gleiche Elemente sind mit gleichen Bezugsziffern versehen, wobei hier lediglich die Besonderheiten dargestellt sind.

Der Gleitabschnitt 200 und die Nocke 202 der Hubscheibe 192 sind innerhalb des Mitnehmerabschnitts 194 angeordnet. Der Mitnehmerabschnitt 194 ist innerhalb des Hülsenabschnitts 198 angeordnet. Der Hülsenabschnitt 198 weist an seiner inneren Umfangsfläche Ausnehmungen 214 auf. Der Hülsenabschnitt 198 ist koaxial innerhalb der Welle 62 angeordnet. Die Schaltwalze 190 ist in der Ausnehmung 196 aufgenommen.

Der Mitnehmerabschnitt 194 wird relativ zu der Hubscheibe 192 gedreht, und zwar in Richtung eines Pfeils 216. Dadurch, dass die Ausnehmung 196 über die Nocke 202 hinweggleitet, wird die Schaltwalze 190 in der Ausnehmung 196 in radialer Richtung von der Nocke 202 nach außen gedrückt und greift in die Ausnehmung 214 des Hülsenabschnitts 198 ein. Dadurch wird der Schaltwalzenmitnehmer 188 drehfest mit der zweiten Nockenwelle 172 verbunden, so dass die Drehbewegung der ersten Nockenwelle 64 auf die zweite Nockenwelle 172 übertragen wird. Wenn die Ausnehmung 196 an der Nocke vorbeigedreht wird, bewegt sich die Schaltwalze 190 radial nach innen auf den Gleitabschnitt 200 zu. Dadurch wird die Schaltwalze 190 außer Eingriff der Ausnehmung 214 gebracht, so dass die drehfeste Verbindung zwischen dem Schaltwalzenmitnehmer 188 und der zweiten Nockenwelle 172 gelöst wird. Dadurch wird die zweite Nockenwelle 172 bei jeder vollständigen Umdrehung der ersten Nockenwelle 64 um einen bestimmten Drehwinkel mitgedreht. Der Drehwinkel ist dabei bestimmt durch Größe der Nocke 202.

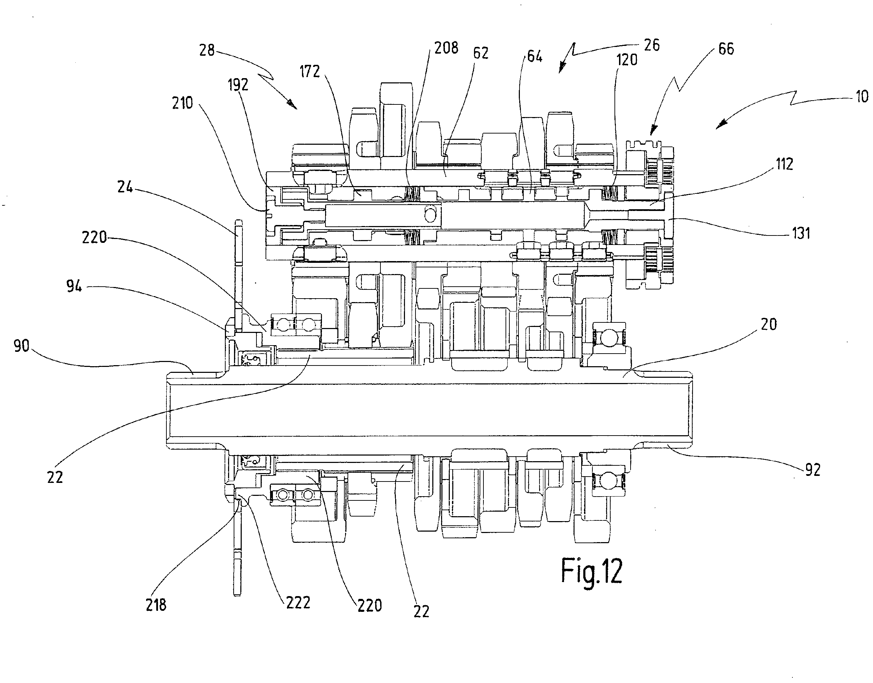

Fig. 12 zeigt eine Schnittansicht durch die Getriebeeinheit 10 entlang der Eingangswelle 20 und der Welle 62. Gleiche Elemente sind mit gleichen Bezugsziffern bezeichnet, wobei hier nur die Besonderheiten erläutert sind. Das Kettenblatt 24 ist mittels der Zentralschraube 94 mit der Ausgangswelle 22 drehfest verbunden. Das Kettenblatt 24 ist mit einer Innenverzahnung 218 versehen. Ein Anschlusselement 220 ist drehfest mit der Ausgangswelle 22 verbunden. Die Innenverzahnung 218 greift in einen Anschlussabschnitt 222 des Anschlusselementes 220, wodurch eine formschlüssige Verbindung gebildet wird.

Dadurch, dass die Innenverzahnung 218 mit dem Anschlussabschnitt 222 eine formschlüssige Verbindung bildet, kann das Kettenblatt 24 durch Aufstecken und Fixieren mittels der Zentralschraube 94 einfach an der Ausgangswelle 22 montiert oder ausgetauscht werden.

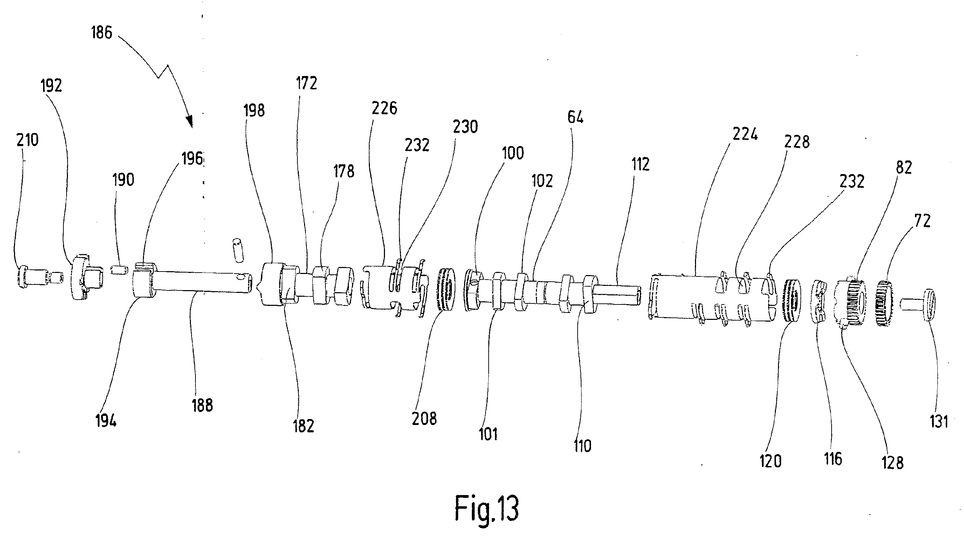

Fig. 13 ist eine Explosionsdarstellung einer Ausführungsform der Getriebeeinheit gemäß Fig. 10. Gleiche Elemente sind mit gleichen Bezugsziffern bezeichnet, wobei hier lediglich die Unterschiede erläutert sind.

Zusätzlich zu den in Fig. 10 dargestellten Elementen weist die Getriebeeinheit gemäß Fig. 13 eine erste Federhülse 224 und eine zweite Federhülse 226 auf. Die Federhülsen 224, 226 sind zylinderförmig ausgebildet und weisen jeweils eine Mehrzahl von Ausnehmungen 228, 230 auf, die in jeweiligen Mantelflächen der Federhülsen 224, 226 ausgebildet sind. Die Ausnehmungen 228, 230 sind im Wesentlichen U-förmig ausgebildet mit zwei parallelen Schlitzen in Umfangsrichtung und einem Schlitz in axialer Richtung, der die beiden parallelen Schlitze miteinander verbindet. Dadurch sind zwischen den Schlitzen an der Mantelfläche in jeder der Ausnehmungen 228, 230 Federelemente 232 gebildet. Die Federelemente 232 sind einstückig mit der jeweiligen Federhülse 224, 226 ausgebildet. Die erste Federhülse 224 ist der ersten Nockenwelle 64 zugeordnet. Die zweite Federhülse 226 ist der zweiten Nockenwelle 172 zugeordnet. Im zusammengebauten Zustand der Getriebeeinheit 10 umgibt die erste Federhülse 224 die erste Nockenwelle 64 umfänglich und ist gleichzeitig von der Welle 62 umfänglich umgeben. Die Federhülse 226 umgibt im zusammengebauten Zustand der Getriebeeinheit 10 die zweite Nockenwelle 172 umfänglich und ist gleichzeitig umfänglich von der Welle 62 umgeben. Demnach sind die Federhülsen 224, 226 koaxial zu der Welle 62 an der inneren Umfangsfläche der Welle 62 angeordnet bzw. gelagert. Die Federelemente 232 sind in der jeweiligen Mantelfläche der Federhülsen 224, 226 derart ausgebildet, dass jeweils eines der Federelemente 232 einer der Ausnehmungen 96 der Welle 62 bzw. einer Schaltklinke 98 zugeordnet ist. Die Federhülsen 224, 226 sind jeweils mit der Welle 62 drehfest verbunden.

Die Federelemente 232 dienen dazu, die Schaltklinken 98 federnd zu lagern, so dass die Schaltklinken 98 ohne Einwirkung einer Kraft durch eine der Nockenwellen 64, 172 gegenüber der Welle 62 hervorstehen. Das bedeutet, dass die Schaltklinken 98 durch die Federkraft der Federelemente 232 im Bereich der Nocken 110 derart nach innen schwenken, dass der jeweilige Eingriffsabschnitt 148 radial nach außen gegenüber der Welle 62 hervorsteht. Durch die Federelemente 232 ist gewährleistet, dass die Eingriffsabschnitte 148 der Schaltklinken 98 zuverlässig nach radial außen schwenken. Dadurch, dass die Federelemente 232 durch die Ausnehmungen 228, 230 in der jeweiligen Mantelfläche der Federhülsen 224, 226 ausgebildet sind, ist eine kostengünstige Herstellung der Federelemente 232 und gleichzeitig eine einfache Montage der Federelemente 232 möglich.

Das Zusammenwirken der Federelemente 232 mit den Schaltklinken 98 ist im Weiteren näher erläutert.

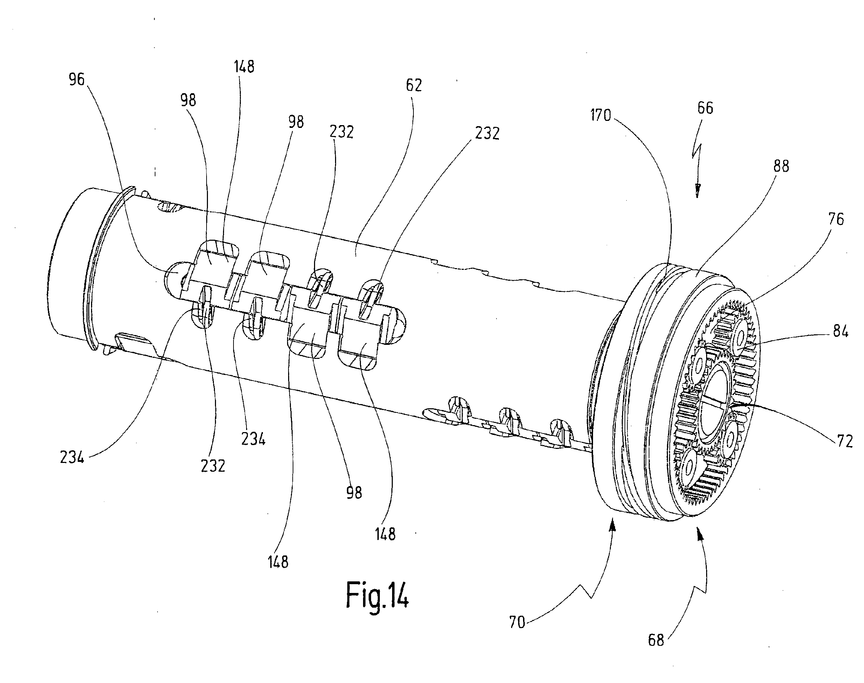

In Fig. 14 ist die Welle 62 in einer perspektivischen Zusammenbauzeichnung dargestellt. Die Darstellung in Fig. 14 entspricht im Wesentlichen der Darstellung aus Fig. 9, wobei gleiche Elemente mit gleichen Bezugsziffern bezeichnet sind, wobei hier lediglich die Unterschiede erläutert sind.

Die Schaltklinken 98 entsprechen im Wesentlichen der in Fig. 7 dargestellten Schaltklinke 142, wobei insoweit auf Fig. 7 Bezug genommen wird.

Die Schaltklinken 98 sind mit den Federelementen 232 versehen, wobei die Federelemente 232 jeweils in einer Nut 234 der Schaltklinken 98 aufgenommen sind. Insofern weichen die Schaltklinken 98 aus Fig. 14 von der in Fig. 7 dargestellten Schaltklinke 142 ab. Die Nuten 234 sind an einem Abschnitt der Schaltklinken 98 ausgebildet, der nach radial innen schwenkbar ist.

Die Federelemente 232 üben auf die Schaltklinken 98 eine Kraft derart aus, dass der hier nicht dargestellte Betätigungsabschnitt 144 nach radial innen vorgespannt ist. Dadurch schwenkt der Eingriffsabschnitt 148 der Schaltklinke 98 nach außen, sofern die entsprechende Nocke 110, 182 der entsprechenden Schaltklinke 98 zugewandt ist. Wenn die entsprechende Nockenwelle 64, 172 weitergedreht wird, so dass der entsprechende Gleitabschnitt 108, 178 der Schaltklinke 98 zugewandt ist, wird der Betätigungsabschnitt 144 nach radial außen gedrückt, der Eingriffsabschnitt 148 nach radial innen geschwenkt und das Federelement 232 gespannt.

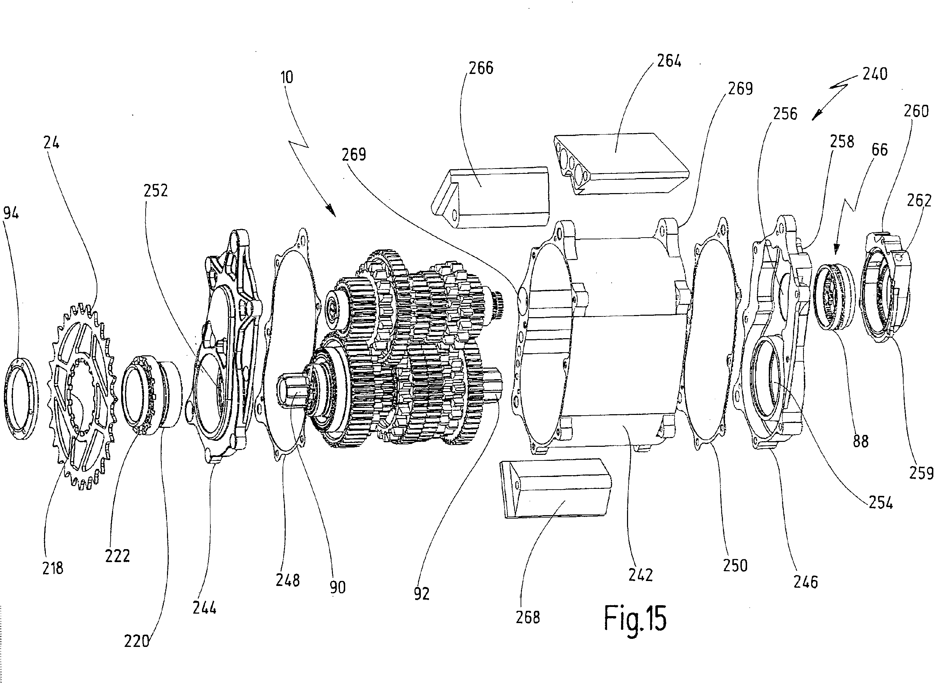

In Fig. 15 ist eine Explosionsdarstellung eines Getriebegehäuses für die Getriebeeinheit 10 dargestellt. In Fig. 15 ist ein Getriebegehäuse allgemein mit 240 bezeichnet.

Das Getriebegehäuse 240 weist einen Gehäusemantel 242 auf, der im zusammengebauten Zustand die Getriebeeinheit 10 im Wesentlichen umfänglich umgibt. Das Getriebegehäuse 240 weist einen ersten Gehäusedeckel 244 und einen zweiten Gehäusedeckel 246 auf, die den Gehäusemantel 242 an seinen axialen Enden verschließen und entsprechend Stirnflächen des Getriebegehäuses 240 bilden. Zwischen den Gehäusedeckeln 244, 246 und dem Gehäusemantel 242 sind jeweils Gehäusedichtungen 248, 250 angeordnet. Die Gehäusedeckel 244, 246 weisen jeweils eine Öffnung 252, 254 auf, um die jeweiligen Verbindungsabschnitte 90, 92 der Eingangswelle 22 nach außen zu führen. Durch die Öffnung 252 ist ferner das Anschlusselement 220 geführt, das das Kettenblatt 24 mit der Ausgangswelle 22 drehfest verbindet. Das Anschlusselement 220 weist den Anschlussabschnitt 222 auf, der als Verzahnung ausgebildet ist. Das Kettenblatt 24 weist die Innenverzahnung 218 auf, die in die Verzahnung des Anschlussabschnittes 222 greift und das Kettenblatt 24 mit dem Anschlusselement 220 drehfest verbindet. Das Kettenblatt 24 ist mittels der Zentralschraube 44 an dem Anschlusselement 220 festgelegt. Der Gehäusedeckel 246 weist ferner eine Öffnung 256 auf, durch die hindurch die Welle 62 nach außen geführt ist. An der Öffnung 256, und zwar an einer äußeren Seite 258 des Gehäusedeckels 246 ist das Drehzahlüberlagerungsgetriebe 66 montiert. Das Drehzahlüberlagerungsgetriebe 66 ist mit der Welle 62, die durch die Öffnung 256 geführt ist, verbunden. An der äußeren Seite 258 des Gehäusedeckels 246 ist ein Getriebedeckel 259 festgelegt, der das Drehzahlüberlagerungsgetriebe 66 umfänglich und an einer dem Gehäusedeckel 246 abgewandten Stirnseite umgibt. Der Getriebedeckel 259 weist zwei Durchführungen 260, 262 auf, durch die hindurch Bowdenzüge führbar sind, die in der Rille 170 der Zugscheibe 88 aufgenommen werden können, um die Zugscheibe 88 zu betätigen bzw. zu rotieren.

Dem Getriebegehäuse 240 sind Lagerelemente 264, 266, 268 zugeordnet. Die Lagerelemente 264, 266, 268 dienen dazu, das Getriebegehäuse 240 mit dem Rahmen 12 fest zu verbinden bzw. das Getriebegehäuse 240 an dem Rahmen 12 zu lagern. Die Lagerelemente 264, 266, 268 sind vorzugsweise mittels schwingungsdämpfenden Lagern 269 aus z.B. Gummi mit dem Getriebegehäuse 240 verbunden, um eine Schwingungsentkopplung zwischen dem Getriebegehäuse 240 und dem Rahmen 12 zu bilden. Die Lager 269 können somit verhindern, dass Getriebegeräusche ungedämpft an den Resonanzkörper des Fahrradrahmens 12 übertragen werden, so dass das Getriebegehäuse 240 von dem Rahmen 12 akustisch entkoppelt ist.

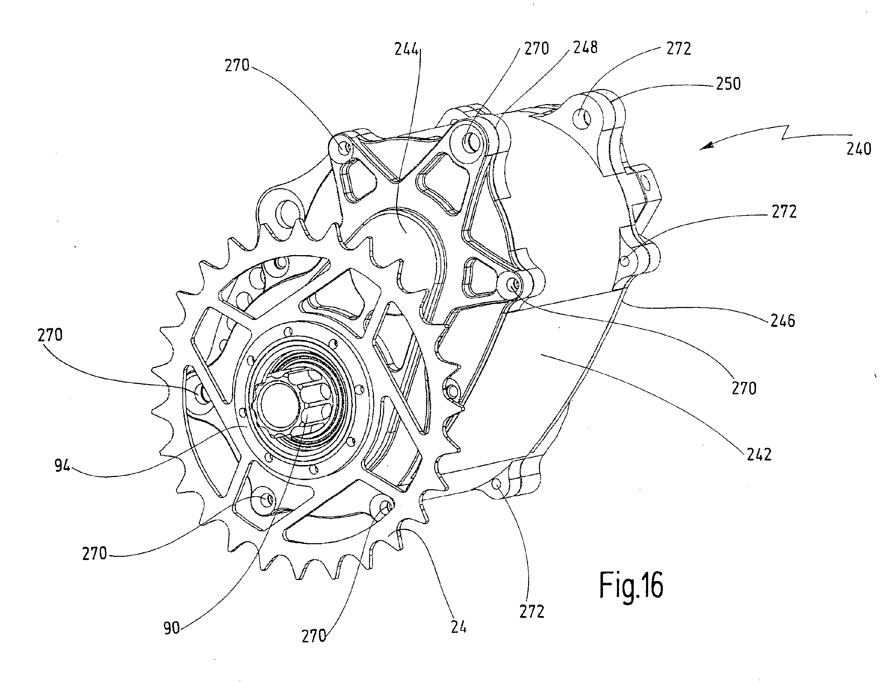

In Fig. 16 ist eine perspektivische Zusammenbauzeichnung des Getriebegehäuses 240 dargestellt. Gleiche Elemente sind mit gleichen Bezugsziffern versehen, wobei hier lediglich die Besonderheiten erläutert sind.

Die Gehäusedeckel 244, 246 weisen eine Mehrzahl von Schraublöchern 270 auf. Der Gehäusemantel 242 weist eine entsprechende Mehrzahl von Schraublöchern 272 auf. Mittels der Schraublöcher 270, 272 werden die Gehäusedeckel 244, 246 mit dem Gehäusemantel 242 verschraubt. Ferner dienen die Schraublöcher 270, 272 dazu, das Getriebegehäuse 240 mit dem Rahmen 12 bzw. mit den Lagerelementen 264, 266, 268 zu verbinden. Die Schraublöcher 270, 272 können ferner gleichzeitig zur Lagerung von Hinterradfederungen bei vollgefederten Fahrrädern dienen.

## Patentansprüche

1. Schaltvorrichtung (60) für eine Getriebeeinheit (10) eines insbesondere mit Muskelkraft angetriebenen Fahrzeugs, mit einer ersten Welle (36, 46), die als Hohlwelle ausgebildet ist, an der eine Mehrzahl von Losrädern (38-43) gelagert ist, wobei die Losräder (38-43) mit einer entsprechenden Mehrzahl von Zahnrädern (30-35), die an einer zweiten Welle (20) gelagert sind, in Eingriff stehen, wobei die zweite Welle (20) als Durchgangswelle ausgebildet ist, die zum Antreiben an ihren Enden mit Kurbeln verbindbar ist, wobei die Losräder (38-43) mittels Schaltmitteln (98, 142) mit der ersten Welle (36, 46) verbindbar sind, wobei die Schaltmittel (98, 142) mittels einer koaxial in der ersten Welle (36, 46) angeordneten Nockenwelle (64; 174) betätigbar sind, wobei die Nockenwelle (64; 174) mit Antriebsmitteln (66) verbunden ist, um zum Betätigen der Schaltmittel (98; 142) relativ zu der ersten Welle (36, 46) rotiert zu werden, **dadurch gekennzeichnet, dass** die Antriebsmittel (66) ein Drehzahlüberlagerungsgetriebe (66) aufweisen, das koaxial zu der ersten Welle (36, 46) angeordnet ist.

2. Schaltvorrichtung (60) für eine Getriebeeinheit (10) eines insbesondere mit Muskelkraft angetriebenen Fahrzeugs, mit einer ersten Welle (36, 46), die als Hohlwelle ausgebildet ist, an der eine Mehrzahl von Losrädern (38-43) gelagert ist, wobei die Losräder (38-43) mit einer entsprechenden Mehrzahl von Zahnrädern (30-35), die an einer zweiten Welle (20) gelagert sind, in Eingriff stehen, wobei die Losräder (38-43) mittels Schaltmitteln (98, 142) mit der ersten Welle (36, 46) verbindbar sind, wobei die Schaltmittel (98, 142) mittels einer koaxial in der ersten Welle (36, 46) angeordneten Nockenwelle (64; 174) betätigbar sind, wobei die Nockenwelle (64; 174) mit Antriebsmitteln (66) verbunden ist, um zum Betätigen der Schaltmittel (98; 142) relativ zu der ersten Welle (36, 46) rotiert zu werden, **dadurch gekennzeichnet, dass** die Antriebsmittel (66) ein Drehzahlüberlagerungsgetriebe (66) aufweisen, das koaxial zu der ersten Welle (36, 46) angeordnet ist, wobei koaxial in der ersten Welle (36, 46) eine zweite Nockenwelle (172) angeordnet ist, um eine Mehrzahl von zweiten Losrädern (48-50), die an der ersten Welle (36, 46) gelagert sind, mittels Schaltmitteln (98, 142) mit der ersten Welle (36, 46) zu verbinden.

3. Schaltvorrichtung nach Anspruch 1 oder dem Oberbegriff von Anspruch 1 oder 2, **dadurch gekennzeichnet, dass** die Antriebsmittel (66) zwei Planetengetriebe (68, 70) aufweisen, wobei Planetenträger (76) der Planetengetriebe (68, 70) miteinander verbunden sind.

4. Schaltvorrichtung nach Anspruch 2 oder 3, **dadurch gekennzeichnet, dass** ein Sonnenrad (72) eines ersten der Planetengetriebe (68, 70) mit der Nockenwelle (64) drehfest verbunden ist und ein Sonnenrad (82) eines zweiten der Planetengetriebe (68, 70) mit der ersten Welle (62) drehfest verbunden ist.

5. Schaltvorrichtung nach einem der Ansprüche 2 bis 4, **dadurch gekennzeichnet, dass** ein Hohlrad (86) des zweiten der Planetengetriebe (68, 70) mit Betätigungsmitteln (88) verbunden ist.

6. Schaltvorrichtung nach einem der Ansprüche 1 bis 5 oder dem Oberbegriff von Anspruch 2, **dadurch gekennzeichnet, dass** die Nockenwelle (64) mittels Rastmitteln (114) mit der ersten Welle (62) in wenigstens einer Rotationsposition verbindbar ist.

7. Schaltvorrichtung nach Anspruch 6, **dadurch gekennzeichnet, dass** die Rastmittel (114) ein erstes Rastglied (116) aufweisen, das mit der Nockenwelle (64) drehfest verbunden ist und ein zweites Rastglied (118) aufweisen, das mit der ersten Welle (62) drehfest verbunden ist.

8. Schaltvorrichtung nach Anspruch 7, **dadurch gekennzeichnet, dass** wenigstens eines der Rastglieder (116, 118) federnd axial verschieblich gelagert ist.

9. Schaltvorrichtung nach dem Oberbegriff von Anspruch 1 oder 2, **dadurch gekennzeichnet, dass** koaxial in der ersten Welle (36, 46) eine zweite Nockenwelle (172) angeordnet ist, die mittels eines Mitnehmers (186) der ersten Nockenwelle (64) relativ zu der ersten Welle (36, 46) drehbar ist.

10. Schaltvorrichtung nach Anspruch 9, **dadurch gekennzeichnet, dass** die zweite Nockenwelle (172) mittels Rastmitteln (206, 212) in wenigstens einer Rotationsposition mit der ersten Welle (62) verbindbar ist.

11. Schaltvorrichtung nach Anspruch 9 oder 10, **dadurch gekennzeichnet, dass** die zweite Nockenwelle (172) federnd axial verschieblich gelagert ist.

12. Schaltvorrichtung nach einem der Ansprüche 9 bis 11, **dadurch gekennzeichnet, dass** der Mitnehmer (186) ein bewegliches Mitnehmerelement (190) aufweist, das auf einem Gleitabschnitt (200) gleitet, der mit der ersten Welle (62) drehfest verbunden ist.

13. Schaltvorrichtung nach Anspruch 12, **dadurch gekennzeichnet, dass** das Mitnehmerelement (190) in einer Ausnehmung (196) eines Mitnehmergliedes (188) in radialer Richtung beweglich gelagert ist.

14. Schaltvorrichtung nach einem der Ansprüche 1 bis 13, **dadurch gekennzeichnet, dass** die Schaltmittel (98; 142) als schaltbare Freiläufe (98; 142) ausgebildet sind und dass die Nockenwellen (64, 174) derart ausgebildet sind, dass die Freiläufe (98; 142) von zwei aufeinanderfolgenden Gangstufen gleichzeitig mit den Losrädern (38-43, 48-50) in Eingriff bringbar sind.

15. Schaltvorrichtung nach einem der Ansprüche 1 bis 14 oder dem Oberbegriff von Anspruch 2, **dadurch gekennzeichnet, dass** in der ersten Welle (62) eine Federhülse (224, 226) angeordnet ist, die die Nockenwelle (64, 174) umfänglich umgibt, um die Schaltmittel (98) mit einer Federkraft vorzuspannen.

## Claims

1. A shifting device (60) for a transmission unit (10) of a vehicle, in particular a vehicle that is driven by muscle force, having a first shaft (36, 46), which is formed as a hollow shaft, on which a plurality of free gears (38-43) is mounted, wherein the free gears (38-43) are in engagement with a corresponding plurality of gearwheels (30-35), which are mounted on a second shaft (20), wherein the second shaft (20) is formed as a through shaft, which is connectable at the ends thereof to cranks for the purpose of driving, wherein the free gears (38-43) are connectable to the first shaft (36, 46) by means of selecting means (98, 142), wherein the selecting means (98, 142) can be actuated by means of a camshaft (64; 174) arranged coaxially in the first shaft (36, 46), wherein the camshaft (64; 174) is connected to driving means (66) in order to be rotated relative to the first shaft (36, 46) to actuate the selecting means (98; 142), **characterized in that** the driving means (66) have a rotational speed superimposition gear unit (66), which is arranged coaxially with the first shaft (36, 46).

2. The shifting device (60) for a transmission unit (10) of a vehicle, in particular a vehicle that is driven by muscle force, having a first shaft (36, 46), which is formed as a hollow shaft, on which a plurality of free gears (38-43) is mounted, wherein the free gears (38-43) are in engagement with a corresponding plurality of gearwheels (30-35), which are mounted on a second shaft (20), wherein the free gears (38-43) are connectable to the first shaft (36, 46) by means of selecting means (98, 142), wherein the selecting means (98, 142) can be actuated by means of a camshaft (64; 174) arranged coaxially in the first shaft (36, 46), wherein the camshaft (64; 174) is connected to driving means (66) in order to be rotated relative to the first shaft (36, 46) to actuate the selecting means (98; 142), **characterized in that** the driving means (66) have a rotational speed superimposition gear unit (66), which is arranged coaxially with the first shaft (36, 46), wherein a second camshaft (172) is arranged coaxially in the first shaft (36, 46) in order to connect a plurality of second free gears (48-50), which are mounted on the first shaft (36, 46), to the first shaft (36, 46) by means of selecting means (98, 142).

3. The shifting device as claimed in claim 1 or in accordance with the preamble of claim 1 or 2, **characterized in that** the driving means (66) have two planetary gear units (68, 70), wherein planet carriers (76) of the planetary gear units (68, 70) are connected to one another.

4. The shifting device as claimed in claim 2 or 3, **characterized in that** a sun gear (72) of a first of the planetary gear units (68, 70) is connected rotationally fixed to the camshaft (64) and that a sun gear (82) of a second of the planetary mechanisms (68, 70) is connected rotationally fixed to the first shaft (62).

5. The shifting device as claimed in one of claims 2 to 4, **characterized in that** a ring gear (86) of the second of the planetary gear units (68, 70) is connected to actuating means (88).

6. The shifting device as claimed in one of claims 1 to 5 or in accordance with the preamble of claim 2, **characterized in that** the camshaft (64) can be connected to the first shaft (62) by means of latching means (114) in at least one rotational position.

7. The shifting device as claimed in claim 6, **characterized in that** the latching means (114) have a first latching member (116), which is connected rotationally fixed to the camshaft (64), and a second latching member (118), which is connected rotationally fixed to the first shaft (62).

8. The shifting device as claimed in claim 7, **characterized in that** at least one of the latching members (116, 118) is spring-mounted so as to be axially movable.

9. The shifting device in accordance with the preamble of claim 1 or 2, **characterized in that** a second camshaft (172) is arranged coaxially in the first shaft (36, 46) and can be rotated relative to the first shaft (36, 46) by means of a tappet (186) of the first camshaft (64).

10. The shifting device as claimed in claim 9, **characterized in that** the second camshaft (172) is connectable to the first shaft (62) in at least one rotational position by means of latching means (206, 212).

11. The shifting device as claimed in claim 9 or 10, **characterized in that** the second camshaft (172) is spring-mounted so as to be axially movable.

12. The shifting device as claimed in one of claims 9 to 11, **characterized in that** the tappet (186) has a movable tappet element (190), which slides on a sliding section (200), which is connected rotationally fixed to the first shaft (62).

13. The shifting device as claimed in claim 12, **characterized in that** the tappet element (190) is mounted in a recess (196) of a tappet member (188) so as to be movable in a radial direction.

14. The shifting device as claimed in one of claims 1 to 13, **characterized in that** the selecting means (98; 142) are designed as selectable freewheels (98; 142) and that the camshafts (64, 174) are designed in such a way that the freewheels (98; 142) of two successive gears stages can be brought into engagement simultaneously with the free gears (38-43, 48-50).

15. The shifting device as claimed in one of claims 1 to 14 or in accordance with the preamble of claim 2, **characterized in that** a spring sleeve (224, 226) is arranged in the first shaft (62), surrounding the camshaft (64, 174) circumferentially in order to preload the selecting means (98) with a spring force.

## Revendications

1. Dispositif de commutation (60) pour une unité de transmission (10) d'un véhicule notamment entraîné par la force musculaire, comprenant un premier arbre (36, 46) qui est réalisé sous forme d'arbre creux, sur lequel est supportée une pluralité de roues folles (38-43), les roues folles (38-43) étant en prise avec une pluralité correspondante de roues dentées (30-35) qui sont supportées sur un deuxième arbre (20), le deuxième arbre (20) étant réalisé sous forme d'arbre traversant qui peut être connecté à ses extrémités à des bielles pour l'entraînement, les roues folles (38-43) pouvant être connectées par le biais de moyens de commutation (98, 142) au premier arbre (36, 46), les moyens de commutation (98, 142) pouvant être actionnés au moyen d'un arbre à came (64 ; 174) disposé coaxialement dans le premier arbre (36, 46), l'arbre à came (64 ; 174) étant connecté à des moyens d'entraînement (66) afin d'être entraîné en rotation par rapport au premier arbre (36, 46) en vue de l'actionnement des moyens de commutation (98 ; 142), **caractérisé en ce que** les moyens d'entraînement (66) présentent un réducteur différentiel (66) qui est disposé coaxialement par rapport au premier arbre (36, 46).

2. Dispositif de commutation (60) pour une unité de transmission (10) d'un véhicule notamment entraîné par la force musculaire, comprenant un premier arbre (36, 46) qui est réalisé sous forme d'arbre creux, sur lequel est supportée une pluralité de roues folles (38-43), les roues folles (38-43) étant en prise avec une pluralité correspondante de roues dentées (30-35) qui sont supportées sur un deuxième arbre (20), les roues folles (38-43) pouvant être connectées par le biais de moyens de commutation (98, 142) au premier arbre (36, 46), les moyens de commutation (98, 142) pouvant être actionnés au moyen d'un arbre à came (64 ; 174) disposé coaxialement dans le premier arbre (36, 46), l'arbre à came (64 ; 174) étant connecté à des moyens d'entraînement (66) afin d'être entraîné en rotation par rapport au premier arbre (36, 46) en vue de l'actionnement des moyens de commutation (98 ; 142), **caractérisé en ce que** les moyens d'entraînement (66) présentent un réducteur différentiel (66) qui est disposé coaxialement par rapport au premier arbre (36, 46), un deuxième arbre à came (172) étant disposé coaxialement dans le premier arbre (36, 46), afin de relier une pluralité de deuxièmes roues folles (48-50) qui sont supportées sur le premier arbre (36, 46), par le biais de moyens de commutation (98, 142), au premier arbre (36, 46).

3. Dispositif de commutation selon la revendication 1 ou selon le préambule de la revendication 1 ou 2, **caractérisé en ce que** les moyens d'entraînement (66) présentent deux engrenages planétaires (68, 70), des porte-satellites (76) des engrenages planétaires (68, 70) étant connectés les uns aux autres.

4. Dispositif de commutation selon la revendication 2 ou 3, **caractérisé en ce qu'**une roue solaire (72) d'un premier des engrenages planétaires (68, 70) est connectée de manière solidaire en rotation à l'arbre à came (64) et une roue solaire (82) d'un deuxième des engrenages planétaires (68, 70) est connectée de manière solidaire en rotation au premier arbre (62).

5. Dispositif de commutation selon l'une quelconque des revendications 2 à 4, **caractérisé en ce qu'**une couronne dentée (86) du deuxième des engrenages planétaires (68, 70) est connectée à des moyens d'actionnement (88).

6. Dispositif de commutation selon l'une quelconque des revendications 1 à 5 ou selon le préambule de la revendication 2, **caractérisé en ce que** l'arbre à came (64) peut être connecté par le biais de moyens d'encliquetage (114) au premier arbre (62) dans au moins une position de rotation.

7. Dispositif de commutation selon la revendication 6, **caractérisé en ce que** les moyens d'encliquetage (114) présentent un premier organe d'encliquetage (116) qui est connecté de manière solidaire en rotation à l'arbre à came (64) et un deuxième organe d'encliquetage (118) qui est connecté de manière solidaire en rotation au premier arbre (62).

8. Dispositif de commutation selon la revendication 7, **caractérisé en ce qu'**au moins l'un des organes d'encliquetage (116, 118) est monté de manière déplaçable axialement élastiquement.

9. Dispositif de commutation selon le préambule de la revendication 1 ou 2, **caractérisé en ce qu'**un deuxième arbre à came (172) est disposé coaxialement dans le premier arbre (36, 46), lequel peut tourner par rapport au premier arbre (36, 46) au moyen d'un dispositif d'entraînement (186) du premier arbre à came (64).

10. Dispositif de commutation selon la revendication 9, **caractérisé en ce que** le deuxième arbre à came (172) peut être connecté au premier arbre (62) par le biais de moyens d'encliquetage (206, 212) dans au moins une position de rotation.

11. Dispositif de commutation selon la revendication 9 ou 10, **caractérisé en ce que** le deuxième arbre à came (172) est monté de manière déplaçable axialement élastiquement.

12. Dispositif de commutation selon l'une quelconque des revendications 9 à 11, **caractérisé en ce que** le dispositif d'entraînement (186) présente un élément d'entraînement déplaçable (190) qui glisse sur une portion de glissement (200) connectée de manière solidaire en rotation au premier arbre (62).

13. Dispositif de commutation selon la revendication 12, **caractérisé en ce que** l'élément d'entraînement (190) est monté de manière déplaçable dans la direction radiale dans un évidement (196) d'un organe d'entraînement (188).

14. Dispositif de commutation selon l'une quelconque des revendications 1 à 13, **caractérisé en ce que** les moyens de commutation (98 ; 142) sont réalisés sous forme de roues libres commutables (98 ; 142) et **en ce que** les arbres à came (64, 174) sont réalisés de telle sorte que les roues libres (98 ; 142) de deux rapports de transmission successifs puissent être amenées en prise simultanément avec les roues folles (38-43, 48-50).

15. Dispositif de commutation selon l'une quelconque des revendications 1 à 14, ou selon le préambule de la revendication 2, **caractérisé en ce que** dans le premier arbre (62) est disposée une douille à ressort (224, 226) qui entoure l'arbre à came (64, 174) sur sa périphérie afin de précontraindre les moyens de commutation (98) avec une force de ressort.
